# EUROPEAN PATENT APPLICATION

(11) **EP 4 664 772 A1**
(43) Date of publication of application: **17.12.2025**
(21) Application number: 24759509.3
(22) Date of filing: 01.02.2024
(51) Int. Cl.: H04B 1/40

(54) **RADIO FREQUENCY DEVICE AND CONTROL SIGNAL TRANSMISSION METHOD**

(30) Priority: 24.02.2023 CN 202310207289
(71) Applicant: Huawei Technologies Co., Ltd., Shenzhen, Guangdong 518129 (CN)
(72) Inventor: SHENG, Zhonghua, Shenzhen, Guangdong 518129 (CN); WEI, Hao, Shenzhen, Guangdong 518129 (CN); YANG, Zhichang, Shenzhen, Guangdong 518129 (CN)
(74) Representative: Isarpatent
(86) International application number: PCT/CN2024/075281
(87) International publication number: WO 2024/174832

(57) **Abstract**

Embodiments of this application provide a radio frequency apparatus and a control signal transmission method, which relate to the field of chip technologies, to improve a rate of communication between a radio frequency transceiver and a radio frequency front-end module. A specific solution is as follows: A radio frequency transceiver includes a primary control interface, and the primary control interface includes a first clock port and a first data port. Each radio frequency front-end module in at least one radio frequency front-end module includes a secondary control interface, and the secondary control interface includes a second clock port and a second data port. The first clock port is coupled to the second clock port of the at least one radio frequency front-end module through a control bus based on a daisy chain of a linear topology structure, and the first data port is coupled to the second data port of the at least one radio frequency front-end module through the control bus based on a daisy chain of a ring topology structure. Embodiments of this application are used in a process in which the radio frequency transceiver performs programming on the radio frequency front-end module.

## Description

This application claims priority to Chinese Patent Application No. 202310207289.3, filed with the China National Intellectual Property Administration on February 24, 2023 and entitled "RADIO FREQUENCY APPARATUS AND CONTROL SIGNAL TRANSMISSION METHOD", which is incorporated herein by reference in its entirety.

### TECHNICAL FIELD

Embodiments of this application relate to the field of chip technologies, and in particular, to a radio frequency apparatus and a control signal transmission method.

### BACKGROUND

A 5th generation mobile communication technology (5th generation mobile communication technology, 5G) terminal includes a baseband processing part and a radio frequency processing part. The radio frequency processing part includes a radio frequency transceiver and a radio frequency front-end module. A service signal interface and a programming signal interface exist between the radio frequency transceiver and the radio frequency front-end module. The programming signal interface may also be referred to as a control signal interface. One radio frequency transceiver may be coupled to a plurality of radio frequency front-end modules, that is, transmission of service signals and control signals may be performed between the radio frequency transceiver and the plurality of radio frequency front-end modules.

Usually, the control signal interface between the radio frequency transceiver and the plurality of radio frequency front-end modules may be implemented through a mobile industry processor interface (mobile industry processor interface, MIPI) radio frequency front-end module protocol interface or a serial peripheral interface (Serial Peripheral Interface, SPI). However, in the single-drive multi-coupling manner, when the MIPI radio frequency front-end interface or the SPI is used, a maximum rate supported by the radio frequency transceiver and the plurality of radio frequency front-end modules in a communication process is limited, and as a quantity of radio frequency front-end modules increases, quality of the control signal easily deteriorates.

### SUMMARY

Embodiments of this application provide a radio frequency apparatus and a control signal transmission method, to improve a rate of communication between a radio frequency transceiver and a plurality of radio frequency front-end modules.

To achieve the foregoing objectives, the following technical solutions are used in embodiments of this application.

According to a first aspect, a radio frequency apparatus is provided. The radio frequency apparatus includes: a radio frequency transceiver, where the radio frequency transceiver includes a primary control interface, and the primary control interface includes a first clock port and a first data port; and at least one radio frequency front-end module, where each radio frequency front-end module includes a secondary control interface, and the secondary control interface includes a second clock port and a second data port. The first clock port is coupled to the second clock port of the at least one radio frequency front-end module through a control bus based on a daisy chain of a linear topology structure, and the first data port is coupled to the second data port of the at least one radio frequency front-end module through the control bus based on a daisy chain of a ring topology structure.

The linear topology structure and the ring topology structure are two network topology structures of a daisy chain topology. For example, the linear topology structure may be understood as that there are nodes A-B-C-D-E, and A-B-C-D-E and C-M-N-O (branching at C) are a daisy chain linear topology. The ring topology structure may be understood as a loop connection from a last node to a first node, for example, A-B-C-D-E-A, which is usually referred to as a "daisy chain loop." In other words, in this application, the clock port of the radio frequency transceiver and the clock port of the at least one radio frequency front-end module form the linear topology structure in the daisy chain structure, and the data port of the radio frequency transceiver and the data port of the at least one radio frequency front-end module form the ring topology structure in the daisy chain structure. In this way, a data signal and a clock signal in a control signal that are sent by the radio frequency transceiver to the at least one radio frequency front-end module may be unidirectionally transmitted, including that the radio frequency transceiver indicates the radio frequency front-end module to perform a write operation, a read operation, or the like. Control signals transmitted through the control bus are all unidirectionally transmitted. In other words, this application is different from a conventional solution in which a radio frequency transceiver sends a control signal to a radio frequency front end in a single-drive manner. In the conventional solution, a data output end of the radio frequency transceiver is directly connected to data input ends of a plurality of radio frequency front-end modules, and a clock output end of the radio frequency transceiver is also directly connected to clock input ends of the plurality of radio frequency front-end modules. However, as a quantity of radio frequency front-end modules increases, transmission efficiency of a data signal and a clock signal is low. In this application, in a coupling manner of the daisy chain connection of the linear topology structure and the daisy chain connection of the ring topology structure, a rate at which the radio frequency transceiver sends the control signal to the radio frequency front-end module can be increased, even as a quantity of radio frequency front-ends increases, data may also be read back at a full rate.

In a possible design, the first clock port includes a first clock output port, the second clock port includes a second clock input port, and the first clock output port is cascade-coupled to the second clock input port of the at least one radio frequency front-end module in sequence through the clock line in the control bus based on the daisy chain of the linear topology structure. In this way, when sending a clock signal to a radio frequency front-end module, the radio frequency transceiver may send the clock signal to the radio frequency front-end module through a daisy-chain clock line of a linear topology structure. The clock signal may be unidirectionally transmitted to the radio frequency front-end module in a chain structure, and a transmission rate is high. Therefore, even if a quantity of radio frequency front-end modules increases, the transmission rate of the clock signal is not affected.

In a possible design, the first data port includes a first data output port and a first data input port, and the second data port includes a second data input port and a second data output port. The first data output port and the first data input port are coupled to the second data input port and the second data output port of the at least one radio frequency front-end module through a data line in the control bus based on the daisy chain of the ring topology structure, to form a data loopback link. In other words, a clock output port of a last radio frequency front-end module on a link of the daisy chain may not be coupled to the clock input end of the radio frequency transceiver. This can simplify a port design of the radio frequency transceiver. The clock line and the data line may be combined to form the control bus, and the clock line and the data line use a same bus control protocol.

In a possible design, when the at least one radio frequency front-end module is a plurality of radio frequency front-end modules, the plurality of radio frequency front-end modules include at least one first radio frequency front-end module and a second radio frequency front-end module, and the second radio frequency front-end module is a last radio frequency front-end module on the daisy chain of the linear topology structure. The secondary control interface of each first radio frequency front-end module further includes a second clock output port.

It may also be understood that a second data output port of the second radio frequency front-end module is directly connected to the first data input port of the radio frequency transceiver. The second radio frequency front-end module may also have a second clock output port, but the second clock output port of the second radio frequency front-end module is not used, that is, is not coupled to the first clock input port of the radio frequency transceiver. In this way, when the readback data is transmitted to the first data input port of the radio frequency transceiver, a clock logic circuit in the radio frequency transceiver may be configured to sample the readback data, and the first clock input port does not need to be disposed in the radio frequency transceiver. Therefore, for the radio frequency transceiver, a quantity of disposed ports/pins can be reduced, and chip complexity can be reduced.

In a possible design, the primary control interface transparently transmits a first control signal through the control bus, the first control signal includes a first clock signal and a first data signal, and the first clock signal indicates the radio frequency front-end module to sample the received first data signal. The first clock port transparently transmits the first clock signal to the second clock port of each radio frequency front-end module through the clock line in the control bus, and the first data port transparently transmits the first data signal to the second data port of each radio frequency front-end module through the data line in the control bus.

In other words, when the first control signal generated by the radio frequency transceiver needs to access the target radio frequency front-end module, and each radio frequency front-end module receives the first clock signal in the first control signal from a previous radio frequency front-end module, each radio frequency front-end module needs to transparently transmit the first clock signal to a next radio frequency front-end module. When receiving the data signal in the control signal from the previous radio frequency front-end module, each radio frequency front-end module also needs to transparently transmit the data signal to the next radio frequency front-end module. This can improve transmission efficiency of the first control signal. Certainly, when receiving the first data signal and the first clock signal, the last radio frequency front-end module does not need to continue to perform transparent transmission.

In a possible design, when the first control signal indicates a target radio frequency front-end module in the at least one radio frequency front-end module to perform a write operation, the first control signal includes an identifier, to-be-written data, and a register address of the target radio frequency front-end module. The target radio frequency front-end module is configured to: sample the first data signal based on the first clock signal, to obtain the to-be-written data and the register address; and write the to-be-written data into a register of the target radio frequency front-end module based on the register address. In other words, when the first data signal is transparently transmitted to a second data port of the target radio frequency front-end module through the data line, the target radio frequency front-end module needs to first transparently transmit the first data signal to a next radio frequency front-end module. If the target radio frequency front-end module identifies, based on the identifier carried in the first data signal, that the write operation needs to be performed, when the first data signal is unidirectionally transmitted to the target radio frequency front-end module based on the register address through the daisy chain of the ring topology structure, transmission efficiency is high.

In a possible design, the first control signal indicates a target radio frequency front-end module in the at least one radio frequency front-end module to perform a read operation, and when the read operation is used to read back data that is written into a register of the target radio frequency front-end module, the first control signal includes an identifier and a register address of the target radio frequency front-end module.

The target radio frequency front-end module is configured to: after sampling the first data signal based on the first clock signal to obtain the register address, read the data corresponding to the register address, and generate a second control signal, where the second control signal includes the data corresponding to the register address. The target radio frequency front-end module transparently transmits the second control signal to the radio frequency transceiver. In this design, after the target radio frequency front-end module performs the write operation, whether the readback/written data is correct is considered. In other words, the target radio frequency front-end module reads the written data through the read operation, and returns the read data to the radio frequency transceiver based on the second control signal, so that the radio frequency transceiver determines whether the data written through the write operation is correct. The second control signal is also unidirectionally returned to the radio frequency transceiver through the data line.

In a possible design, when the first control signal indicates the at least one radio frequency front-end module to perform an identifier initialization operation of the radio frequency front-end module, the first control signal includes an identifier of a 1^{st} radio frequency front-end module in the at least one radio frequency front-end module.

Each radio frequency front-end module is configured to: after performing local-identifier initialization of the radio frequency front-end module, generate a third control signal, where the third control signal includes an identifier of a next radio frequency front-end module; and send the third control signal to the next radio frequency front-end module. The first data signal and the first clock signal that are transmitted from the radio frequency transceiver are first transparently transmitted in each radio frequency front-end module, until the first data signal and the first clock signal are transparently transmitted to the last radio frequency front-end module. Each radio frequency front-end module further needs to first perform local-identifier initialization based on the received data signal, generate the identifier of the next radio frequency front-end module, encapsulate the identifier into the third control signal, and send the third control signal to the next radio frequency front-end module. In other words, the identifier of the next radio frequency front-end module is notified by the current radio frequency front-end module. In this way, a manner of unidirectionally transmitting the control signal through the ring link and the chain link is more efficient than the single-drive transmission manner in the conventional technology.

In a possible design, the first data signal includes a synchronization header field, a chip select field, an operation mode field, a burst length field, and an address field. The synchronization header field indicates that transmission of the first control signal starts, the chip select field indicates the identifier of the radio frequency front-end module, the operation mode field indicates that the first control signal is a write operation instruction, or a read operation instruction, or an identifier initialization instruction, the burst length field indicates a register address length for performing one read operation or one write operation, and the address field indicates a register address during a write operation or a read operation. Fields included in the data signal is not limited thereto, and another field may be further included. Both the first data signal sent by the radio frequency transceiver to the at least one radio frequency front-end module and a data signal in a readback response sent by the radio frequency front-end module to the radio frequency transceiver may be transmitted based on a format of the first data signal.

In a possible design, the control signal includes a synchronization header field, the synchronization header field occupies N consecutive bits, bit values of the N consecutive bits are 1, and another field other than the synchronization header field in the first data signal does not have N consecutive bits, where N is an integer greater than or equal to 5. In all bits occupied by the another field in the first data signal, a bit value of a preceding bit of every N-1 consecutive bits is 0.

In a conventional scenario in which a radio frequency transceiver and at least one radio frequency front-end module are in a single drive mode, a length of the synchronization header field is usually less than 5 bits, for example, 4 bits. In this application, a length of the synchronization header field is set to N bits whose bit values are 1, N is an integer greater than or equal to 5, and another field is set to a field without N consecutive bits whose bit values are 1. Therefore, a receive side can quickly identify, based on the synchronization header field, that transmission of the first control signal starts.

In a possible design, the synchronization header field occupies 5 consecutive bits, bit values of the 5 consecutive bits are 1, and in all bits occupied by fields other than the synchronization header field in the first data signal, a bit value of a preceding bit of every 4 consecutive bits is 0. In other words, in this application, the synchronization header field may occupy 5 consecutive bits whose values are 1, and the other fields do not have 5 consecutive bits whose values are 1, so that the receive side can quickly identify, based on the synchronization header field, that transmission of the first control signal starts. In addition, when 1 bit whose value is 0 is inserted into every 4 bits, it can be ensured that a quantity of clock cycles is greater than a quantity of data cycles. In other words, when no data is transmitted, a clock is always transmitted. Therefore, when data is read back, the radio frequency front-end module may continue to provide a clock for the radio frequency front-end module when initialization of the radio frequency front-end module is not completed, and the radio frequency front-end module does not need to return the readback data in a current clock cycle.

In a possible design, when the operation mode field indicates that the first control signal is the write operation instruction, the first data signal further includes a switch number field and a data field. The switch number field indicates a quantity of registers, in the first data signal, when a write operation is performed on a same register address, and the data field indicates data to be written into the register address indicated by the address field. The switch number field may be understood as performing a plurality of write operations on a same address, and may be used together with the burst length field. For example, the plurality of write operations are first performed based on a same address, and then the write operation is performed in a two-dimensional configuration manner with increasing burst lengths. For example, when the burst length field indicates three addresses, for each address, four registers may be continuously written into based on the switch number field, which is a two-dimensional write operation. In a conventional write operation, one address indicates a bit value of one register, and repeated writing cannot be performed on one address.

In a possible design, when the operation mode field indicates that the first data signal is the read operation instruction, or the write operation instruction, or the identifier initialization instruction, the first data output port of the radio frequency transceiver is configured to send the first data signal to the second data input port of the at least one radio frequency front-end module through the data line in the control bus. The first clock output port of the radio frequency transceiver is configured to send the first clock signal to the second clock input port of the at least one radio frequency front-end module through the clock line in the control bus. When the at least one first radio frequency front-end module is a plurality of first radio frequency front-end modules, for each first radio frequency front-end module, the second data input port of the first radio frequency front-end module is configured to transparently transmit the received first data signal to the second data output port of the first radio frequency front-end module, and the second data output port of the first radio frequency front-end module is configured to send the first data signal to the second data input port of a next first radio frequency front-end module through the data line in the control bus. For each first radio frequency front-end module, the second clock input port of the first radio frequency front-end module is configured to transparently transmit the received first clock signal to the second clock output port of the first radio frequency front-end module, and the second clock output port of the first radio frequency front-end module is configured to send the first clock signal to the second clock input port of the next first radio frequency front-end module through the clock line in the control bus.

In other words, regardless of whether the first control signal is the read operation instruction, or the write operation instruction, or the identifier initialization instruction, each radio frequency front-end module that receives the first data signal first unconditionally performs transparent transmission to the next radio frequency front-end module, including transparently transmitting the received first data signal and transparently transmitting the first clock signal. Then, the radio frequency front-end module that receives the first control signal determines, based on the first data signal, whether a response is required. This can improve efficiency of accessing the radio frequency front-end module by the radio frequency transceiver when the first control signal is transmitted unidirectionally.

In a possible design, when the operation mode field indicates that the first control signal is the read operation instruction, the chip select field indicates an identifier of a k^{th} radio frequency front-end module in the at least one radio frequency front-end module, and k is a natural number, the k^{th} radio frequency front-end module is configured to: read data information based on the burst length field, the address field, and the switch number field, generate a read response instruction, and transmit a data signal of the read response instruction to the first data input port of the radio frequency transceiver through the second data output port of the k^{th} radio frequency front-end module, a data port between the second data output port of the k^{th} radio frequency front-end module and the second data output port of the second radio frequency front-end module, and the second data output port of the second radio frequency front-end module; and transmit a clock signal of the read response instruction to the second clock input port of the second radio frequency front-end module through the second clock output port of the k^{th} radio frequency front-end module, and a clock port between the second clock output port of the k^{th} radio frequency front-end module and the second clock input port of the second radio frequency front-end module. The radio frequency transceiver is configured to sample, by using a clock recovery circuit in the radio frequency transceiver, the data signal that is of the read response instruction and that is input from the first data input port.

In other words, the readback response sent by the radio frequency front-end module to the radio frequency transceiver is also transmitted unidirectionally. In a readback process, a rate does not need to be reduced, and readback can be implemented at a full rate. This improves readback efficiency.

In a possible design, when the operation mode field indicates that the first data signal is a first identifier initialization instruction, a first data signal of the first identifier initialization instruction includes the identifier of the 1^{st} radio frequency front-end module in the at least one radio frequency front-end module. When the at least one radio frequency front-end module is a plurality of radio frequency front-end modules, the 1^{st} radio frequency front-end module is configured to configure the identifier of the 1^{st} radio frequency front end according to the first identifier initialization instruction received through the second data input port and the second clock input port of the 1^{st} radio frequency front-end module, and generate a second identifier initialization instruction, where the second identifier initialization instruction includes an identifier of a 2^{nd} radio frequency front-end module in the at least one radio frequency front-end module; and send the second identifier initialization instruction to the 2^{nd} radio frequency front-end module through the second data output port and the second clock output port of the 1^{st} radio frequency front-end module. A k^{th} radio frequency front-end module in the at least one radio frequency front-end module is configured to: receive, through the second data input port and the second clock input port of the k^{th} radio frequency front-end module, a k^{th} identifier initialization instruction sent by a (k-1)^{th} radio frequency front-end module, where the k^{th} identifier initialization instruction includes an identifier of the k^{th} radio frequency front-end module; and configure the identifier of the k^{th} radio frequency front-end module according to the k^{th} identifier initialization instruction; and generate a (k+1)^{th} identifier initialization instruction, where the (k+1)^{th} identifier initialization instruction includes an identifier of a (k+1)^{th} radio frequency front-end module in the at least one radio frequency front-end module; and send the (k+1)^{th} identifier initialization instruction to the (k+1)^{th} radio frequency front-end module through the second data output port and the second clock output port of the k^{th} radio frequency front-end module.

In other words, when the first data signal is the first identifier initialization instruction, the first identifier initialization instruction may be first transparently transmitted by each radio frequency front-end module, and each radio frequency front-end module may first learn in advance that identifier initialization needs to be performed. In addition, each radio frequency front-end module may configure an identifier of the radio frequency front-end module according to a received identifier initialization instruction, generate an identifier initialization instruction indicating a next radio frequency front-end module, and send the identifier initialization instruction to the next radio frequency front-end module. In this way, in an identifier initialization process, an identifier configuration process may be triggered by only one initialization instruction, and same radio frequency front-end modules may be used on a same chain. This is different from an existing case in which two completely same radio frequency front-end modules are not supported on a same chain.

In a possible design, a clock line between the first clock output port of the radio frequency transceiver and the second clock input port of the 1^{st} radio frequency front-end module in the at least one radio frequency front-end module has a same length as a data line between the first data output port of the radio frequency transceiver and the second data input port of the 1^{st} radio frequency front-end module; and for two adjacent radio frequency front-end modules in the at least one radio frequency front-end module, a clock line between the second clock output port of a previous radio frequency front-end module and the second clock input port of a current radio frequency front-end module has a same length as a data line between the second data output port of the previous radio frequency front-end module and the second data input port of the current radio frequency front-end module.

In this way, when both control signal transmission and data readback are unidirectional, and each segment of clock line has a same length as each segment of data line, a phase relationship between a clock and data between any two nodes can remain unchanged, to facilitate timing convergence; and in the readback process, the rate does not need to be reduced, and readback can be implemented at the full rate. In addition, there is no constraint on a distance between adjacent components, provided that a data line and a clock line between the components have a same length and a signal drive requirement is met.

According to a second aspect, a control signal transmission method is provided. The method is applied to a radio frequency apparatus. The radio frequency apparatus includes: a radio frequency transceiver, where the radio frequency transceiver includes a primary control interface, and the primary control interface includes a first clock port and a first data port; and at least one radio frequency front-end module, where each radio frequency front-end module includes a secondary control interface, and the secondary control interface includes a second clock port and a second data port. The first clock port is coupled to the second clock port of the at least one radio frequency front-end module through a control bus based on a daisy chain of a linear topology structure, and the first data port is coupled to the second data port of the at least one radio frequency front-end module through the control bus based on a daisy chain of a ring topology structure. The method includes: The first clock port of the primary control interface sends a first clock signal in a first control signal to the second clock port of each radio frequency front-end module through a clock line in the control bus. The first data port of the primary control interface sends a first data signal in the first control signal to the second data port of each radio frequency front-end module through a data line in the control bus, where the first clock signal is used by each radio frequency front-end module to sample the received first data signal.

For beneficial effect of the second aspect, refer to the descriptions of the first aspect.

In a possible design, the first clock port includes a first clock output port, the second clock port includes a second clock input port, and the first clock output port is cascade-coupled to the second clock input port of the at least one radio frequency front-end module in sequence through the clock line in the control bus based on the daisy chain of the linear topology structure.

In a possible design, the first data port includes a first data output port and a first data input port, and the second data port includes a second data input port and a second data output port. The first data output port and the first data input port are coupled to the second data input port and the second data output port of the at least one radio frequency front-end module through a data line in the control bus based on the daisy chain of the ring topology structure, to form a data loopback link.

In a possible design, when the at least one radio frequency front-end module is a plurality of radio frequency front-end modules, the plurality of radio frequency front-end modules include at least one first radio frequency front-end module and a second radio frequency front-end module, and the second radio frequency front-end module is a last radio frequency front-end module on the daisy chain of the linear topology structure. The secondary control interface of each first radio frequency front-end module further includes a second clock output port.

In a possible design, when the first control signal indicates a target radio frequency front-end module in the at least one radio frequency front-end module to perform a write operation, the first control signal includes an identifier, to-be-written data, and a register address of the target radio frequency front-end module. The target radio frequency front-end module samples the first data signal based on the first clock signal, to obtain the to-be-written data and the register address; and writes the to-be-written data into a register of the target radio frequency front-end module based on the register address.

In a possible design, the first control signal indicates a target radio frequency front-end module in the at least one radio frequency front-end module to perform a read operation, and when the read operation is used to read back data that is written into a register of the target radio frequency front-end module, the first control signal includes an identifier and a register address of the target radio frequency front-end module. After sampling the first data signal based on the first clock signal to obtain the register address, the target radio frequency front-end module reads the data corresponding to the register address, and generates a second control signal, where the second control signal includes the data corresponding to the register address. The target radio frequency front-end module transparently transmits the second control signal to the radio frequency transceiver.

In a possible design, when the first control signal indicates the at least one radio frequency front-end module to perform an identifier initialization operation of the radio frequency front-end module, the first control signal includes an identifier of a 1^{st} radio frequency front-end module in the at least one radio frequency front-end module. After performing local-identifier initialization of a radio frequency front-end module, each radio frequency front-end module generates a third control signal, where the third control signal includes an identifier of a next radio frequency front-end module; and sends the third control signal to the next radio frequency front-end module.

In a possible design, the first data signal includes a synchronization header field, a chip select field, an operation mode field, a burst length field, and an address field. The synchronization header field indicates that transmission of the first control signal starts, the chip select field indicates the identifier, in the first control signal, of the radio frequency front-end module, the operation mode field indicates that the first control signal is a write operation instruction, or a read operation instruction, or an identifier initialization instruction, the burst length field indicates a register address length for performing one read operation or one write operation, and the address field indicates a register address during a write operation or a read operation.

In a possible design, the synchronization header field occupies 5 consecutive bits, bit values of the 5 consecutive bits are 1, and in all bits occupied by fields other than the synchronization header field in the first data signal, a bit value of a preceding bit of every 4 consecutive bits is 0.

In a possible design, when the operation mode field indicates that the first control signal is the write operation instruction, the first data signal further includes a switch number field and a data field. The switch number field indicates a quantity of registers, in the first data signal, when a write operation is performed on a same register address, and the data field indicates data to be written into the register address indicated by the address field.

In a possible design, when the operation mode field indicates that the first control signal is a read operation instruction, or a write operation instruction, or an identifier initialization instruction,
that the first data port of the primary interface sends the first data signal in the control signal to the second data port of each radio frequency front-end module through the data line in the control bus includes: The first data output port of the radio frequency transceiver sends the first data signal to the second data input port of the at least one radio frequency front-end module through the data line in the control bus. The first clock output port of the radio frequency transceiver sends the first clock signal to the second clock input port of the at least one radio frequency front-end module through the clock line in the control bus. When the at least one first radio frequency front-end module is a plurality of first radio frequency front-end modules, for each first radio frequency front-end module, the second data input port of the first radio frequency front-end module transparently transmits the received first data signal to the second data output port of the first radio frequency front-end module, and the second data output port of the first radio frequency front-end module sends the first data signal to the second data input port of a next first radio frequency front-end module through the data line in the control bus. That the first clock port of the primary interface sends the clock signal in the control signal to the second clock port of each radio frequency front-end module through the clock line in the control bus includes: For each first radio frequency front-end module, the second clock input port of the first radio frequency front-end module transparently transmits the received first clock signal to the second clock output port of the first radio frequency front-end module, and the second clock output port of the first radio frequency front-end module sends the first clock signal to the second clock input port of the next first radio frequency front-end module through the clock line in the control bus.

In a possible design, when the operation mode field indicates that the first data signal is the read operation instruction, the chip select field indicates an identifier of a k^{th} radio frequency front-end module in the at least one radio frequency front-end module, and the method further includes: The k^{th} radio frequency front-end module reads data information based on the burst length field, the address field, and the switch number field, generates a read response instruction, and transmits a data signal of the read response instruction to the first data input port of the radio frequency transceiver through the second data output port of the k^{th} radio frequency front-end module, a data port between the second data output port of the k^{th} radio frequency front-end module and the second data output port of the second radio frequency front-end module, and the second data output port of the second radio frequency front-end module; and transmits a clock signal of the read response instruction to the second clock input port of the second radio frequency front-end module through the second clock output port of the k^{th} radio frequency front-end module, and a clock port between the second clock output port of the k^{th} radio frequency front-end module and the second clock input port of the second radio frequency front-end module. The radio frequency transceiver samples, by using a clock recovery circuit in the radio frequency transceiver, the data signal that is of the read response instruction and that is input from the first data input port.

In a possible design, when the operation mode field indicates that the first control signal is a first identifier initialization instruction, a first data signal of the first identifier initialization instruction includes the identifier of the 1^{st} radio frequency front-end module in the at least one radio frequency front-end module. The method further includes: When the at least one radio frequency front-end module is a plurality of radio frequency front-end modules, the 1^{st} radio frequency front-end module configures the identifier of the 1^{st} radio frequency front end according to the first identifier initialization instruction received through the second data input port and the second clock input port of the 1^{st} radio frequency front-end module, and generates a second identifier initialization instruction, where the second identifier initialization instruction includes an identifier of a 2^{nd} radio frequency front-end module in the at least one radio frequency front-end module; and sends the second identifier initialization instruction to the 2^{nd} radio frequency front-end module through the second data output port and the second clock output port of the 1^{st} radio frequency front-end module. A k^{th} radio frequency front-end module in the at least one radio frequency front-end module is configured to: receive, through the second data input port and the second clock input port of the k^{th} radio frequency front-end module, a k^{th} identifier initialization instruction sent by a (k-1)^{th} radio frequency front-end module, where the k^{th} identifier initialization instruction includes an identifier of the k^{th} radio frequency front-end module; and configure the identifier of the k^{th} radio frequency front-end module according to the k^{th} identifier initialization instruction; and generate a (k+1)^{th} identifier initialization instruction, where the (k+1)^{th} identifier initialization instruction includes an identifier of a (k+1)^{th} radio frequency front-end module in the at least one radio frequency front-end module; and send the (k+1)^{th} identifier initialization instruction to the (k+1)^{th} radio frequency front-end module through the second data output port and the second clock output port of the k^{th} radio frequency front-end module.

In a possible design, a clock line between the first clock output port of the radio frequency transceiver and the second clock input port of the 1^{st} radio frequency front-end module in the at least one radio frequency front-end module has a same length as a data line between the first data output port of the radio frequency transceiver and the second data input port of the 1^{st} radio frequency front-end module; and for two adjacent radio frequency front-end modules in the at least one radio frequency front-end module, a clock line between the second clock output port of a previous radio frequency front-end module and the second clock input port of a current radio frequency front-end module has a same length as a data line between the second data output port of the previous radio frequency front-end module and the second data input port of the current radio frequency front-end module.

According to a third aspect, a communication apparatus is provided, and includes the radio frequency apparatus in any one of the foregoing designs and at least one processor. The at least one processor is connected to a memory, and the at least one processor is configured to read and execute a program stored in the memory, so that the communication apparatus performs the method in any one of the second aspect or the possible implementations of the second aspect.

According to a fourth aspect, an embodiment of this application provides a computer-readable storage medium, including computer instructions. When the computer instructions are run on an electronic device, the electronic device is enabled to perform the control signal sending method in any one of the second aspect and the possible implementations of the second aspect.

According to a fifth aspect, an embodiment of this application provides a computer program product. When the computer program product is run on a computer or a processor, the computer or the processor is enabled to perform the control signal sending method in any one of the second aspect and the possible implementations of the second aspect.

According to a sixth aspect, an embodiment of this application provides a radio frequency module. The radio frequency module includes an antenna and the radio frequency apparatus in any one of the first aspect and the possible designs of the first aspect.

It may be understood that any radio frequency apparatus, communication apparatus, computer-readable storage medium, computer program product, or the like provided above may be used in the corresponding method provided above. Therefore, for beneficial effect that can be achieved by the radio frequency apparatus, the communication apparatus, the computer-readable storage medium, the computer program product, or the like, refer to the beneficial effect in the corresponding method. Details are not described herein again.

These aspects or other aspects in this application are more concise and comprehensible in the following descriptions.

### BRIEF DESCRIPTION OF DRAWINGS

FIG. 1 is a diagram of a framework of a terminal device according to an embodiment of this application;
FIG. 2 is a diagram of an architecture including a radio frequency transceiver and a radio frequency front end according to an embodiment of this application;
FIG. 3 is a diagram of an MIPI RFFE topology structure according to an embodiment of this application;
FIG. 4(a) and FIG. 4(b) are a diagram of an SPI topology structure according to an embodiment of this application;
FIG. 5 is a diagram of a structure of a radio frequency apparatus according to an embodiment of this application;
FIG. 6 is a diagram of a structure of a radio frequency apparatus according to an embodiment of this application;
FIG. 7 is a diagram of a frame format of a first data signal in a first control signal according to an embodiment of this application;
FIG. 8 is a diagram of a frame format of a first data signal in a first control signal according to an embodiment of this application; and
FIG. 9 is a schematic flowchart of a control signal transmission method according to an embodiment of this application.

### DESCRIPTION OF EMBODIMENTS

For ease of understanding, some concepts related to embodiments of this application are described for reference by using examples. Details are as follows:
A mobile industry processor interface-radio frequency front end (mobile industry processor interface-radio frequency front end, MIPI-RFFE) is a control interface standard used to control a radio frequency front end of a mobile terminal. An MIPI RFFE protocol bus includes one power cable (VIO) and two control lines (SCLK and SDATA). It is easy to implement and deploy, and can implement near-real-time control within a timing range. SCLK may be understood as a clock line, and SDATA may be understood as a data line.

A serial peripheral interface (serial peripheral interface, SPI) is a high-speed, full-duplex, and synchronous communication bus, and occupies only four lines (SCLK, MOSI, MISO, and CS) on pins of a chip. This reduces pins of the chip, and saves space on PCB layout for convenience. MOSI may be understood as a data input line, MISO may be understood as a data output line, and CS may be understood as a chip select signal line.

The following describes technical solutions in embodiments of this application with reference to accompanying drawings in embodiments of this application. In descriptions in embodiments of this application, "/" means "or" unless otherwise specified. For example, A/B may represent A or B. In this specification, "and/or" describes only an association relationship for describing associated objects and represents that three relationships may exist. For example, A and/or B may represent the following three cases: Only A exists, both A and B exist, and only B exists. In addition, in the descriptions in embodiments of this application, "a plurality of" means two or more.

The following terms "first" and "second" are merely intended for a purpose of description, and shall not be understood as an indication or implication of relative importance or implicit indication of a quantity of indicated technical features. Therefore, a feature limited by "first" or "second" may explicitly or implicitly include one or more features. In the descriptions of embodiments, unless otherwise specified, "a plurality of" means two or more.

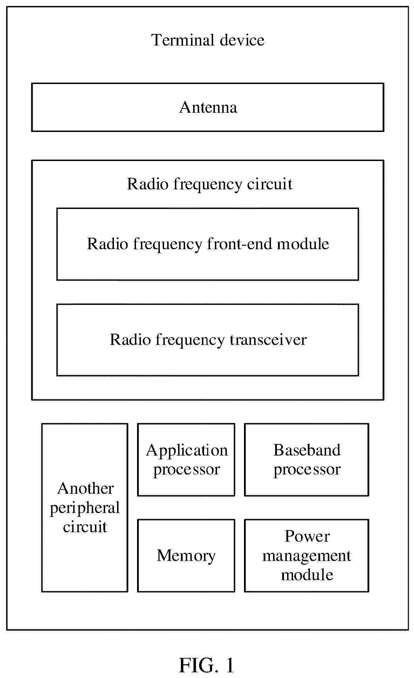

FIG. 1 is a diagram of a framework of a terminal device. A mobile terminal includes an antenna, a radio frequency circuit, a baseband processor (baseband processor, BP), an application processor (application processor, AP), a memory, a power management module, another peripheral circuit (for example, an audio module, a display module, and a camera module), and the like.

The antenna is an apparatus configured to receive a signal in the mobile terminal.

The radio frequency circuit may include a radio frequency transceiver (transceiver) and a radio frequency front-end (radio frequency front-End, RFFE) component. The radio frequency transceiver may also be referred to as a radio frequency integrated circuit (radio frequency Integrated Circuit, RFIC). The radio frequency integrated circuit may be understood as a radio frequency transceiver semiconductor, and may include one logical area and one analog circuit area. The radio frequency transceiver can convert a digital signal from a modem (modem) chip (baseband processor) into an analog signal, convert the analog signal into a signal at a radio frequency that can be used by a user, and then send the signal by using a radio frequency front-end module and the antenna. In addition, the radio frequency transceiver can convert an external signal received by the radio frequency front-end module into a digital signal, and transmit the digital signal to the modem chip. The radio frequency front-end module is a component between the baseband processor and the antenna, and may convert a binary signal into a high-frequency radio electromagnetic wave signal in a signal transmission process, and convert a received electromagnetic wave signal into a binary digital signal in a signal receiving process. The radio frequency front-end module may usually include components such as a power amplifier (power amplifier, PA), a filter, a duplexer, a radio frequency switch, and a low noise amplifier.

The baseband processor may be understood as a wireless modem. Communication between the application processor and the baseband processor may be used to implement functions such as a call, a short message service, and mobile network access based on a conventional AT (attention) command, a mobile broadband interface model (mobile broadband interface model, MBIM), or the like. The functions of the terminal device are mainly implemented by the application processor, and the baseband chip provides the communication function.

It may be understood that the radio frequency circuit is usually a part for sending and receiving information. The baseband processor is usually a part for information processing. The baseband processor may be configured to synthesize a to-be-transmitted baseband signal, and decode a received baseband signal.

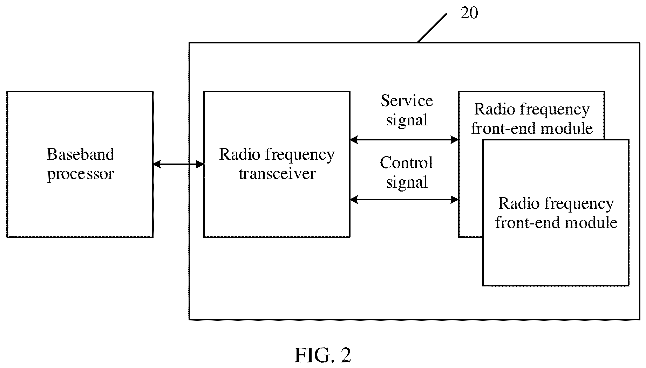

In the 5th generation mobile communication technology (5th generation mobile communication technology, 5G), FIG. 2 is a diagram of an architecture of a radio frequency apparatus 20 including a radio frequency transceiver and a radio frequency front-end module. A service signal interface and a control signal interface exist between the radio frequency transceiver and the radio frequency front-end module. The service signal interface is configured to transmit a service signal, and the control signal interface is configured to transmit a control signal. In addition, one radio frequency transceiver is usually connected to a plurality of radio frequency front-end modules. Because duration of a symbol of a 5G signal is short, the control signal is frequently transmitted, especially in a 5G high frequency (high frequency, HF) scenario, when the terminal device adjusts amplitude and a phase of an antenna element in an antenna array for beamforming, the radio frequency integrated circuit needs to update a codebook sent to the radio frequency front-end module in a service communication process. The codebook indicates the amplitude and the phase of the antenna element. The codebook may also be considered as a control signal sent by the radio frequency transceiver to the radio frequency front-end module. This process requires a large bandwidth for the control signal. Certainly, the control signal may alternatively be a signal of a type other than the codebook. This is not limited in this application.

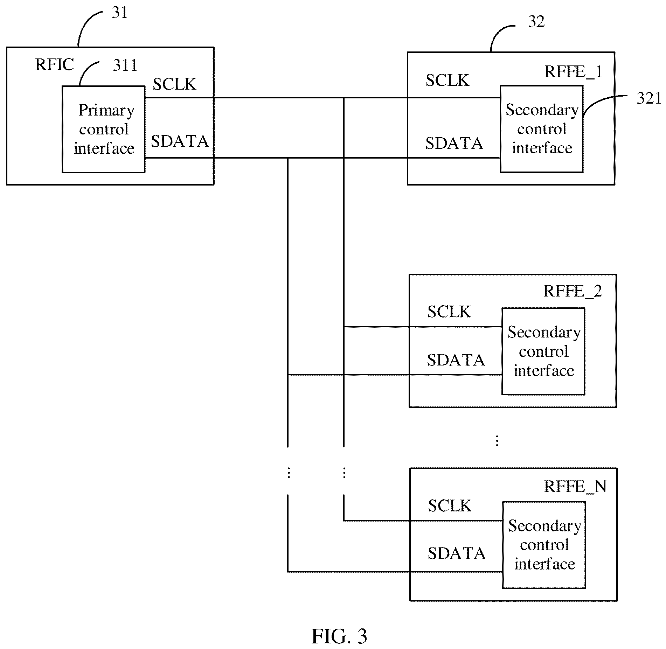

In a conventional solution, a control signal may be transmitted between the radio frequency transceiver and the radio frequency front-end module through a standard MIPI RFFE protocol interface. FIG. 3 is a diagram of an MIPI RFFE topology structure. The structure includes one radio frequency transceiver (RFIC) 31 and a plurality of radio frequency front-end modules 32 (for example, RFFE_1, RFFE_2, ..., and RFFE_N, where N is an integer greater than or equal to 1). The radio frequency transceiver 31 may include a radio frequency transceiver circuit, and the radio frequency front-end module 32 may include a low noise amplifier, a power amplifier, a radio frequency switch, a bandpass filter, and the like. The radio frequency transceiver 31 may be understood as a primary device (master), and the radio frequency front-end module 32 may be understood as a secondary device (slave). In view of this, the radio frequency transceiver 31 further includes a primary interface 311, and the primary interface 311 may be used as a primary bus controller of the MIPI RFFE bus. A port for transmitting a clock signal SCLK and a port for transmitting a data signal SDATA that are of the primary interface 311 may communicate with ports that are of secondary interfaces 321 of the plurality of radio frequency front-end modules 32 and that are configured to transmit the clock signal SCLK and the data signal SDATA. The MIPI RFFE bus also has an external and convertible power supply voltage for an I/O interface. In a conventional RFFE bus system, each radio frequency front-end module is identified by a slave identifier: a unique slave identifier (unique slave identifier, USID), a manufacturer ID, and a product ID. The MIPI specification allows a maximum of 15 RFFEs on the bus and specifies an address range of a component type. The manufacturer ID is defined by the MIPI Alliance, and the product ID is defined by a manufacturer. However, if two identical RFFEs (for example, two apparatuses of a same type that are manufactured by a same manufacturer) are coupled to same SCLK and SDATA signals, a bus collision occurs, and the primary interface 311 may not distinguish between the two same RFFE apparatuses. In some conventional implementations, in this case, addressing may be performed by using additional pins to independently enable or disable apparatuses, or addressing is performed on same RFFEs to distinguish between a plurality of RFFEs.

When the port for transmitting the clock signal SCLK is referred to as a clock port SCLK for short, and the port for transmitting the data signal SDATA is referred to as a data port SDATA for short, the clock port SCLK and the data port SDATA may be configured to transmit a control signal. When the radio frequency transceiver 31 sends a control signal to one of the plurality of radio frequency front-end modules 32, the radio frequency transceiver 31 synchronously sends a clock signal in the control signal and a data part signal (which is referred to as a data signal for short in this application) in the control signal through the clock port SCLK and the data port SDATA. The data signal may carry an identifier of the radio frequency front-end module 32 that needs to perform communication. The radio frequency transceiver 31 and the data port SDATA of the radio frequency front-end module 32 may provide a bidirectional signal, that is, may further send readback data to the data port SDATA of the radio frequency transceiver 31.

It may be understood that the MIPI RFFE topology structure is equivalent to one radio frequency transceiver driving a plurality of radio frequency front-end modules to configure (for example, update a codebook) the plurality of radio frequency front-end modules. Consequently, the following problems may be easily caused.
(1) A clock rate of the clock port SCLK is limited, for example, a maximum clock rate of 52 M may be supported. A rate at which the radio frequency transceiver configures the radio frequency front-end module is low, which easily affects startup time and service switching time.
(2) Usually, in a readback process, readback needs to be performed at a rate that is half of 52 M, readback time is long, and a readback operation greatly affects real-time performance of a configuration operation. Consequently, real-time performance deteriorates.
(3) The MIPI RFFE topology is equivalent to a star connection, and has a high requirement on signal driving. As a quantity of connected radio frequency front-end modules increases, quality of a control signal easily deteriorates and may not converge.
(4) A maximum distance between the radio frequency transceiver and the radio frequency front-end module and a maximum distance between the radio frequency front-end modules are limited, for example, 15 cm. This limits layout and wiring of a printed circuit board (printed circuit board, PCB).
(5) During power-on initialization, USIDs of the plurality of radio frequency front-end modules also need to be modified based on a control signal, and are implemented by independently programming each radio frequency front-end module in a time-division manner. Modification efficiency is low. In addition, when there are at least two completely same radio frequency front-end modules in the plurality of radio frequency front-end modules, programming of USIDs of the at least two completely same radio frequency front-end modules cannot be implemented.

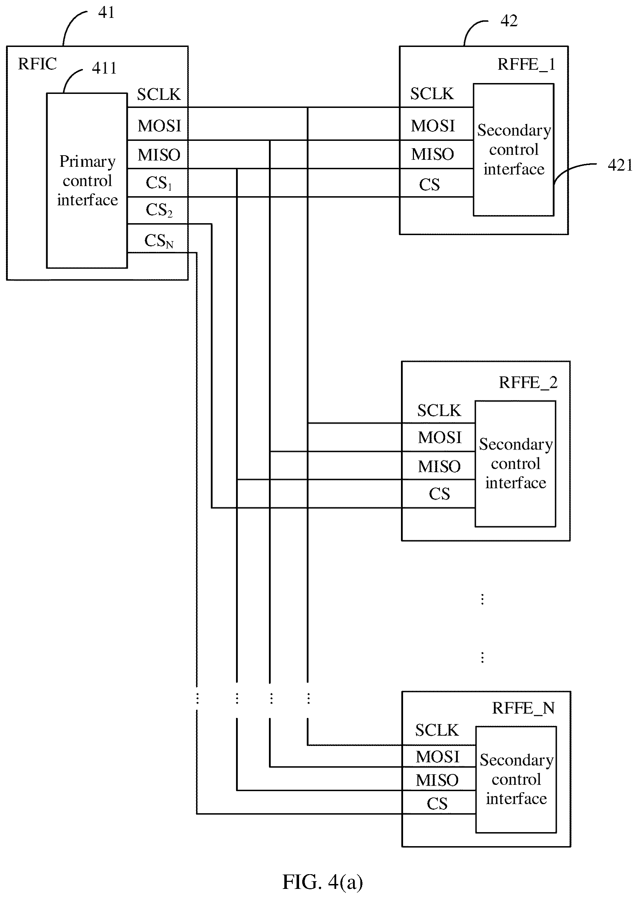

In another conventional solution, a control signal may be transmitted between the radio frequency transceiver and the radio frequency front-end module through an SPI protocol interface. FIG. 4(a) is a diagram of an SPI topology structure. The structure includes one radio frequency transceiver (RFIC) 41 and a plurality of radio frequency front-end modules 42 (for example, RFFE_1, RFFE_2, ..., and RFFE_N, where N is an integer greater than or equal to 1). The radio frequency transceiver 41 includes a primary control interface 411. The primary control interface 411 includes a clock port SCLK, a master output slave input (master output slave input, MOSI) port, a master input slave output (master input slave output, MISO) port, and N chip select (chip select, CS) ports (CS₁, CS₂, ..., and CS_{N}). Each radio frequency front-end module 42 includes a secondary control interface 421, and the secondary control interface 421 includes a clock port SCLK, an MOSI port, an MISO port, and a CS port. The MOSI port and the MISO port are configured to transmit a data part in a control signal. The clock port SCLK of the primary control interface 411 is coupled to the clock port SCLK of each secondary control interface 421, the MOSI port of the primary control interface 411 is coupled to the MOSI port of each secondary control interface 421, and the MISO port of the primary control interface 411 is coupled to the MISO port of each secondary control interface 421. The CS₁ port of the primary control interface 411 is coupled to the CS port of the secondary control interface 421 of RFFE_1, the CS₂ port of the primary control interface 411 is coupled to the CS port of the secondary control interface 421 of RFFE_2. The rest can be deduced by analogy. The CS_{N} port of the primary control interface 411 is coupled to the CS port of the secondary control interface 421 of RFFE_N.

It may be understood that, in the SPI topology shown in FIG. 4(a), the radio frequency transceiver 41 needs a plurality of CS ports, and occupies a plurality of hardware pins. In addition, in the single-drive case, when the radio frequency transceiver 41 and the plurality of radio frequency front-end modules 42 transmit control signals, a supported maximum rate is also limited, and a requirement on signal driving is high. As a quantity of radio frequency front-end modules 42 increases, signal quality easily deteriorates. In the topology, a maximum distance between the radio frequency transceiver and the radio frequency front-end module and a maximum distance between the radio frequency front-end modules are limited.

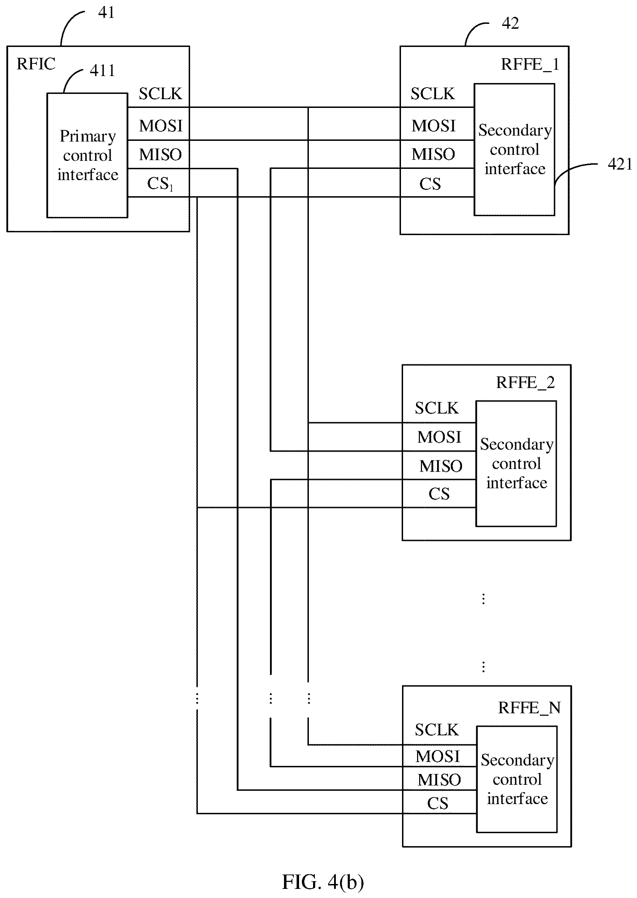

FIG. 4(b) is a diagram of another SPI topology structure. In the SPI topology structure, different from the SPI topology structure shown in FIG. 4(a), shown in FIG. 4(b), the MOSI port that is of the primary interface 411 and that is for transmitting the data part in the control signal is coupled to the MOSI ports of the secondary interfaces 421 of the plurality of radio frequency front-end modules 42 in series, and the MISO port of the secondary interface 421 of the N^{th} radio frequency front-end module RFFE_N is coupled to the MISO port of the primary interface 411 of the radio frequency transceiver 41. This is equivalent to that the data part in the control signal is sequentially transmitted in a serial coupling case. Readback data may be sent to the MISO port of the radio frequency integrated circuit through the MISO port of the N^{th} radio frequency front-end module RFFE_N, to implement readback. However, for the radio frequency transceiver and the clock ports SCLK of the plurality of radio frequency front-end modules, a single-drive structure is still used. In this case, a supported maximum rate is also limited, signal quality easily deteriorates, and maximum distances are limited.

In view of this, this application provides a radio frequency apparatus used in a terminal device. Clock ends and data ends between the radio frequency transceiver and the plurality of radio frequency front-end modules in the radio frequency apparatus are coupled based on a daisy chain. In other words, a clock output end SCLK_o and a data output end SDATA_o of the radio frequency transceiver used as the primary device output a control signal to a clock input end SCLK_i and a data input end SDATA_i of a radio frequency front-end module used as a first-stage secondary device. Then, the control signal is output from a clock output end SCLK_o and a data output end SDATA_o of the radio frequency front-end module used as the first-stage secondary device, sequentially passes through the plurality of radio frequency front-end modules connected in series, and is finally output to a clock input end SCLK_i and a data input end SDATA_i of a radio frequency front-end module used as a last-stage secondary device. In addition, the data output end SDATA_o of the radio frequency front-end module used as the last-stage secondary device may further transmit readback data to the data input end SDATA_i of the radio frequency transceiver used as the primary device.

In this way, when the clock ends and the data ends of the radio frequency transceiver and the plurality of radio frequency front-end modules are configured to transmit the control signal are coupled based on a daisy chain, the radio frequency transceiver unidirectionally sends the control signal to any one of the plurality of radio frequency front-end modules, and a radio frequency front-end module unidirectionally sends the readback data to the radio frequency transceiver. This can avoid a case in which one radio frequency transceiver drives a plurality of radio frequency front-end modules in the conventional solution, and can improve a rate of communication between the radio frequency transceiver and the plurality of radio frequency front-end modules.

The terminal device in embodiments of this application may also be referred to as user equipment (user equipment, UE), an access terminal, a subscriber unit, a subscriber station, a mobile station, a remote station, a remote terminal, a mobile device, a user terminal, a terminal, a wireless communication device, a user agent, or a user apparatus. The terminal device in embodiments of this application may be a mobile phone (mobile phone), a tablet computer (Pad), a computer with a wireless transceiver function, a virtual reality (virtual reality, VR) terminal device, an augmented reality (augmented reality, AR) terminal device, a wireless terminal in industrial control (industrial control), a wireless terminal in self driving (self driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), a terminal device in a 5G network, a terminal device in a future evolved public land mobile network (public land mobile network, PLMN), or the like. An application scenario is not limited in embodiments of this application. In this application, the methods and the steps that are implemented by the terminal device may also be implemented by a component (for example, a chip or a circuit) that may be used in the terminal device. In this application, the foregoing terminal device and the component (for example, the chip or the circuit) that may be disposed in the foregoing terminal device are collectively referred to as a terminal device.

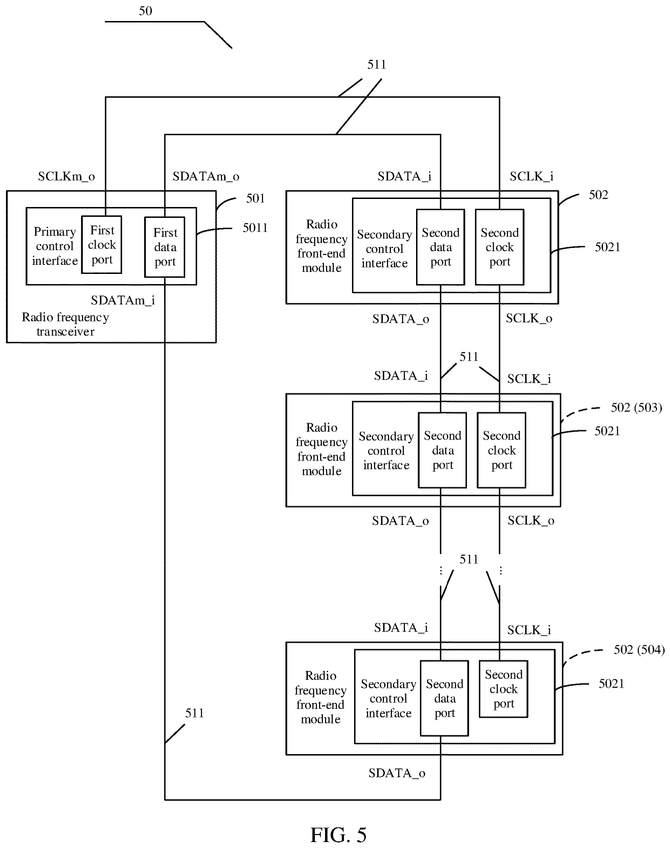

FIG. 5 is a diagram of a structure of a radio frequency apparatus 50 according to this application.

The radio frequency apparatus 50 includes a radio frequency transceiver (RFIC) 501 and at least one radio frequency front-end module 502 (RFFE). The at least one radio frequency front-end module 502 may be the same or not completely the same.

The radio frequency transceiver 501 includes a primary control interface 5011, each of the at least one radio frequency front-end module 502 includes a secondary control interface 5021, the primary control interface 5011 includes a first clock port and a first data port, and the secondary control interface includes a second clock port and a second data port.

The first clock port of the primary control interface 5011 is coupled to the second clock port of the secondary control interface 5021 of the at least one radio frequency front-end module 502 through a control bus 511 based on a daisy chain of a linear topology structure, and the first data port of the primary control interface 5011 is coupled to the second data port of the secondary control interface 5021 of the at least one radio frequency front-end module through the control bus based on a daisy chain of a ring topology structure.

The linear topology structure and the ring topology structure are two network topology structures of a daisy chain topology (daisy chain topology). For example, the linear topology structure may be understood as that there are nodes A-B-C-D-E, and A-B-C-D-E and C-M-N-O (branching at C) are a daisy chain linear topology. The ring topology structure may be understood as a loop connection from a last node to a first node in a case in which a plurality of nodes are sequentially cascaded, for example, A-B-C-D-E-A, which is usually referred to as a "daisy chain loop".

In the daisy chain topology, in addition to a star network, for each daisy chain in the network, a quantity of nodes on the daisy chain may be increased or decreased, only adjacent nodes can directly communicate with each other, and each node is connected to a maximum of two other nodes. When one of the plurality of nodes on the daisy chain is used as a transmitter, a sent signal may be sequentially transmitted to subsequent nodes via the daisy chain.

In some embodiments, the radio frequency transceiver 501 may include a transceiver (not shown in FIG. 5) and the primary control interface 5011, and the radio frequency front-end module 502 may include a radio frequency front-end component (not shown in FIG. 5) and the secondary control interface 5021. The transceiver may receive a digital signal in the control signal from a processor, convert the digital signal into an analog signal, convert the analog signal into a signal at a radio frequency that can be used by a user, and send the signal to the secondary control interface 5021 of the radio frequency front-end module 502 through the primary control interface 5011. The radio frequency front-end component of the radio frequency front-end module 502 converts, by using an antenna, the radio frequency into a radio electromagnetic wave signal for sending. In addition, the primary control interface 5011 of the radio frequency transceiver 501 can convert an external signal received by the secondary control interface 5021 and the radio frequency front-end component of the radio frequency front-end module into a digital signal, and transmit the digital signal to a modem chip. The radio frequency front-end module 502 is a component between a baseband processor and the antenna, and may convert a binary signal into a high-frequency radio electromagnetic wave signal in a signal transmission process, and convert a received electromagnetic wave signal into a binary digital signal in a signal receiving process. The radio frequency front-end component of the radio frequency front-end module 502 may usually include components such as a power amplifier (power amplifier, PA), a filter, a duplexer, a radio frequency switch, and a low noise amplifier.

Refer to FIG. 5. The first clock port includes a first clock output port SCLKm_o, the first data port includes a first data output port SDATAm_o and a first data input port SDATAm_i, and the second clock port includes a second clock input port SCLK_i, a second data input port SDATA_i, and a second data output port SDATA_o.

The first clock output port SCLKm_o of the radio frequency transceiver 501 is cascade-coupled to the second clock input port SCLK_i of the at least one radio frequency front-end module 502 in sequence through a clock line in the control bus based on the daisy chain of the linear topology structure.

The first data output port SDATAm_o and the first data input port SDATAm_i of the radio frequency transceiver 501 are coupled to the second data input port SDATA_i and the second data output port SDATA_o of the at least one radio frequency front-end module 502 through a data line in the control bus based on the daisy chain of the ring topology structure, to form a data loopback link.

In this application, the control bus may be understood as a bus for transmitting a control signal, the control bus includes the clock line and the data line, and the control signal includes a clock signal and a data signal. The data signal may be transmitted through a data line coupled to the first data output port SDATAm_o and the first data input port SDATAm_i of the primary interface 5011 and through a data line coupled to the second data input port SDATA_i and the second data output port SDATA_o. The clock signal may be transmitted through a data line coupled to the first clock output port SCLKm_o and through a data line coupled to the second clock input port SCLK_i.

The "cascade-coupling in sequence" may be understood as that the first clock output port SCLKm_o of the radio frequency transceiver 501 is connected to a second clock input port SCLK_i of a 1^{st} radio frequency front-end module 502, a second clock output port SCLK_o of the 1^{st} radio frequency front-end module 502 is connected to a second clock input port SCLK_i of a 2^{nd} radio frequency front-end module 502, and a second clock output port SCLK_o of the 2^{nd} radio frequency front-end module 502 is connected to a second clock input port SCLK_i of a 3^{rd} radio frequency front-end module 502. Ports are connected in sequence, until a second clock input port SCLK_i of a last radio frequency front-end module 502 is connected in series/cascade-connected, so that the first clock output port SCLKm_o of the radio frequency transceiver 501 is connected in series/cascade-connected to the second clock input ports SCLK_i and the second clock output ports SCLK_o of the plurality of radio frequency front-end modules 502 in sequence.

In this way, when the radio frequency transceiver 501 generates the clock signal in the control signal, the clock signal is output from the first clock output port SCLKm_o of the radio frequency transceiver 501 to the second clock input port SCLK_i of the 1^{st} radio frequency front-end module 502, the second clock input port SCLK_i of the 1^{st} radio frequency front-end module 502 transparently transmits the clock signal to the second clock output port SCLK_o of the 1^{st} radio frequency front-end module 502, and the second clock output port SCLK_o of the 1^{st} radio frequency front-end module 502 transparently transmits the clock signal to the second clock input port SCLK_i of the 2^{nd} radio frequency front-end module 502. The clock signal is transparently transmitted in a unidirectional manner based on a cascading (serial connection) sequence of the radio frequency front-end modules 502, until the clock signal is transparently transmitted to the second clock input port SCLK_i of the last radio frequency front-end module 502.

In some embodiments, the first data output port SDATAm_o and the first data input port SDATAm_i of the radio frequency transceiver 501, and the second data input port SDATA_i and the second data output port SDATA_o of the at least one radio frequency front-end module 502 form the data loopback link through the control bus. This is equivalent to that the data port of the radio frequency transceiver 501 and the data port of the at least one radio frequency front-end module 502 form a closed-loop link. When the radio frequency transceiver 501 sends the control signal to a radio frequency front-end module 502, data information of the control signal may be unidirectionally transmitted on the data loopback link.

The "data loopback link" may be understood as that the first data output port SDATAm_o of the radio frequency transceiver 501 is connected to the second data input port SDATA_i of the 1^{st} radio frequency front-end module 502, the second data output port SDATA_o of the 1^{st} radio frequency front-end module 502 is connected to the second data input port SDATA_i of the 2^{nd} radio frequency front-end module 502, and the second data output port SDATA_o of the 2^{nd} radio frequency front-end module 502 is connected to the second data input port SDATA_i of the 3^{rd} radio frequency front-end module 502. Ports are connected in sequence, until the second data output port SDATA_o of the last radio frequency front-end module 502 is connected in series. Then, the second data output port SDATA_o of the last radio frequency front-end module 502 is connected to the first data input port SDATAm_i of the radio frequency transceiver 501, so that the first data input port SDATAm_i and the first data output port SDATAm_o of the radio frequency transceiver 501 and the second data input ports SDATA_i and the second data output ports SDATA_o of the plurality of radio frequency front-end modules 502 may form the data loopback link.

In this way, when the radio frequency transceiver 501 generates the data signal in the control signal, the data signal is output from the first data output port SDATAm_o of the radio frequency transceiver 501 to a second data input port SDATA_i of the 1^{st} radio frequency front-end module 502, a second data input port SDATA_i of the 1^{st} radio frequency front-end module 502 transparently transmits the data signal to a second data output port SDATA_o of the 1^{st} radio frequency front-end module 502, and the second data output port SDATA_o of the 1^{st} radio frequency front-end module 502 transparently transmits the data signal to a second data input port SDATA_i of the 2^{nd} radio frequency front-end module 502, until the data signal is transparently transmitted to a second data input port SDATA_i of the last radio frequency front-end module 502.

If a radio frequency front-end module 502 generates a response signal (for example, a read response signal), a data signal in the response signal is transparently transmitted in a unidirectional manner from a second data output port SDATA_o of the radio frequency front-end module 502 to the first data input port SDATAm_i of the radio frequency transceiver 501 through a second data input port SDATA_i and a second data output port SDATA_o of a subsequent radio frequency front-end module 502 cascaded to the radio frequency front-end module 502.

In some embodiments, if the at least one radio frequency front-end module 502 is two or more radio frequency front-end modules, the at least one radio frequency front-end module 502 includes at least one first radio frequency front-end module 503 and a second radio frequency front-end module 504, and the second radio frequency front-end module 504 is a last radio frequency front-end module on the daisy chain of the linear topology structure. The at least one first radio frequency front-end module 503 may be the same or may not be completely the same.

The secondary interface 5021 of each of the at least one first radio frequency front-end module 503 includes a second clock input port SCLK_i, a second clock output port SCLK_o, a second data input port SDATA_i, and a second data output port SDATA_o.

The secondary interface 5021 of the second radio frequency front-end module 504 includes a second clock input port SCLK_i, a second data input port SDATA_i, and a second data output port SDATA_o.

A last-stage secondary device, namely, the second radio frequency front-end module 504, may include a second clock output port SCLK_o, but the second clock output port SCLK_o of the second radio frequency front-end module 504 is not used. In this case, a clock input port does not need to be disposed on the radio frequency transceiver 501, for example, the radio frequency transceiver 501 may use an internal clock sampling circuit to perform data sampling on readback data.

In some embodiments, the primary control interface of the radio frequency transceiver 501 may transparently transmit a first control signal through the control bus, the first control signal includes a first clock signal and a first data signal, and the first clock signal indicates each radio frequency front-end module 502 to sample the received first data signal.

The first clock port transparently transmits the first clock signal to the second clock port of each radio frequency front-end module through the clock line in the control bus, and the first data port transparently transmits the first data signal to the second data port of each radio frequency front-end module through the data line in the control bus. In other words, even if the first control signal accesses one of the at least one radio frequency front-end module 502, both the first data signal and the first clock signal in the first control signal need to be first transparently transmitted to each radio frequency front-end module.

Specifically, in some embodiments, if the first control signal indicates a target radio frequency front-end module in the at least one radio frequency front-end module to perform a write operation, the first control signal includes an identifier, to-be-written data, and a register address of the target radio frequency front-end module. The target radio frequency front-end module is configured to: sample the first data signal based on the first clock signal, to obtain the to-be-written data and the register address; and write the to-be-written data into a register of the target radio frequency front-end module based on the register address.

In other words, the second data input port SDATA_i of the secondary control interface 5021 of each of the at least one radio frequency front-end module 502 receives the first data signal. This is equivalent to that the first data signal is transparently transmitted, and the target radio frequency front-end module 502 only needs to perform the write operation according to a write operation instruction. In addition, the second clock input port SCLK_i of the secondary control interface 5021 also receives the first clock signal, that is, the first clock signal of the write operation instruction is also transparently transmitted.

Storage space of one register may include a plurality of storage addresses. The register address herein may be, for example, used to address different storage locations in the register.

If the first control signal indicates a target radio frequency front-end module in the at least one radio frequency front-end module 502 to perform a read operation, when the read operation is used to read data that is written into a register of the target radio frequency front-end module, the first control signal includes an identifier and a register address of the target radio frequency front-end module.

The target radio frequency front-end module is configured to: after sampling the first data signal based on the first clock signal to obtain the register address, read the data corresponding to the register address, and generate a second control signal, where the second control signal includes the data corresponding to the register address. The target radio frequency front-end module transparently transmits the second control signal to the radio frequency transceiver.

In other words, the second data input port SDATA_i of the secondary interface 5021 of each of the at least one radio frequency front-end module 502 receives first data information during the read operation. This is also equivalent to that the first data information is transparently transmitted, and the target radio frequency front-end module only needs to perform the read operation according to the read operation. In addition, the target radio frequency front-end module that executes a read operation instruction may generate a read response instruction (the second control signal), and return data information in the read response instruction to the radio frequency transceiver 501 through a data port of a subsequently cascaded radio frequency front-end module 502. Similarly, if the first control signal is the read operation instruction, the first clock signal is also transparently transmitted through the clock port of the secondary control interface 5021 of each of the at least one radio frequency front-end module 502, that is, each radio frequency front-end module 502 receives first clock information of the read operation instruction.

However, when a second clock signal in the read response instruction (the second control signal) is transparently transmitted to the last radio frequency front-end module 502 in the at least one radio frequency front-end module, and the second clock output port SCLK_o of the last radio frequency front-end module 502 is not used, the secondary interface 5021 of the last radio frequency front-end module 502 may not need to return the second clock signal in the read response instruction to the radio frequency transceiver 501.

In some embodiments, a configuration identifier initialization instruction, namely, a control signal for programming a USID, may also be transmitted between the radio frequency transceiver 501 and the at least one radio frequency front-end module 502.

For example, when the first control signal indicates the at least one radio frequency front-end module 502 to perform an identifier initialization operation of the radio frequency front-end module, the first control signal includes an identifier of a 1^{st} radio frequency front-end module in the at least one radio frequency front-end module 502.

Each radio frequency front-end module 502 is configured to: after performing local-identifier initialization of the radio frequency front-end module, generate a third control signal, where the third control signal includes an identifier of a next radio frequency front-end module; and send the third control signal to the next radio frequency front-end module.

In other words, the first data signal and the first clock signal that are transmitted from the radio frequency transceiver 501 are first transparently transmitted in each radio frequency front-end module 502, until the first data signal and the first clock signal are transparently transmitted to the last radio frequency front-end module. Each radio frequency front-end module 502 further needs to first perform local-identifier initialization based on the received data signal, generate the identifier of the next radio frequency front-end module, encapsulate the identifier into the third control signal, and send the third control signal to the next radio frequency front-end module. In other words, the identifier of the next radio frequency front-end module is notified by the current radio frequency front-end module. In this way, a manner of unidirectionally transmitting the control signal through the ring link and the chain link is more efficient than the single-drive transmission manner in the conventional technology.

In some embodiments, the control signal (or the control instruction) in this application may be understood as an RFFE Bus signal transmitted by the radio frequency transceiver 501 to the at least one radio frequency front-end module 502, and is used to configure a component, for example, a switch or a gain, of a radio frequency front-end module 502. For example, the component of the radio frequency front-end module 502 is an LNA. When a service signal is input to the LNA, amplified by the LNA, and then output, the LNA amplifies a gain of the service signal, for example, 6 dB or 10 dB. The amplified gain may be configured based on the RFFE Bus signal in this application. In other words, the RFFE Bus signal is transmitted to a radio frequency front-end module 502 through the data port and the clock port in this application for gain amplification configuration.

It should be noted that the at least one radio frequency front-end module 502 includes one radio frequency front-end module 502. In a conventional case in which a radio frequency transceiver drives a plurality of radio frequency front-end module, a data signal is not unidirectionally transmitted through a data line, and the data signal may be sent or received through the data line. Time division multiplexing needs to be performed on the data line for sending and receiving, and data transmission efficiency is low. In this application, when the radio frequency transceiver 501 and the data port of the radio frequency front-end module 502 form the loopback link, the data signal is also unidirectionally transmitted through the data line. Even if data needs to be read back, and is transmitted to the radio frequency transceiver 501, a data transmission direction remains unchanged, that is, the data is still unidirectionally transmitted to the radio frequency transceiver 501 through the loopback link. Therefore, data readback efficiency is high.

Therefore, in the radio frequency apparatus 50 provided in this application, when the first clock output port SCLKm_o of the radio frequency transceiver 501 is cascade-coupled to the second clock input port SCLK_i of the at least one radio frequency front-end module in sequence through the control bus, and the first data output port SDATAm_o and the first data input port SDATAm_i of the radio frequency transceiver 501 and the second data input port SDATA_i and the second data output port SDATA_o of the at least one radio frequency front-end module form the data loopback link through the control bus, a signal transmission direction in which the radio frequency transceiver 501 sends the control signal to the at least one radio frequency front-end module 502 may be unidirectional. For example, the signals for performing the write operation and data readback are both unidirectionally transmitted. This is different from the conventional solution in which the radio frequency transceiver sends the control signal to the radio frequency front-end modules in the single-drive manner. In this application, a rate at which the radio frequency transceiver sends the control signal to the at least one radio frequency front-end module can be improved, even as a quantity of radio frequency front-end modules increases, data can still be read back at a full rate.

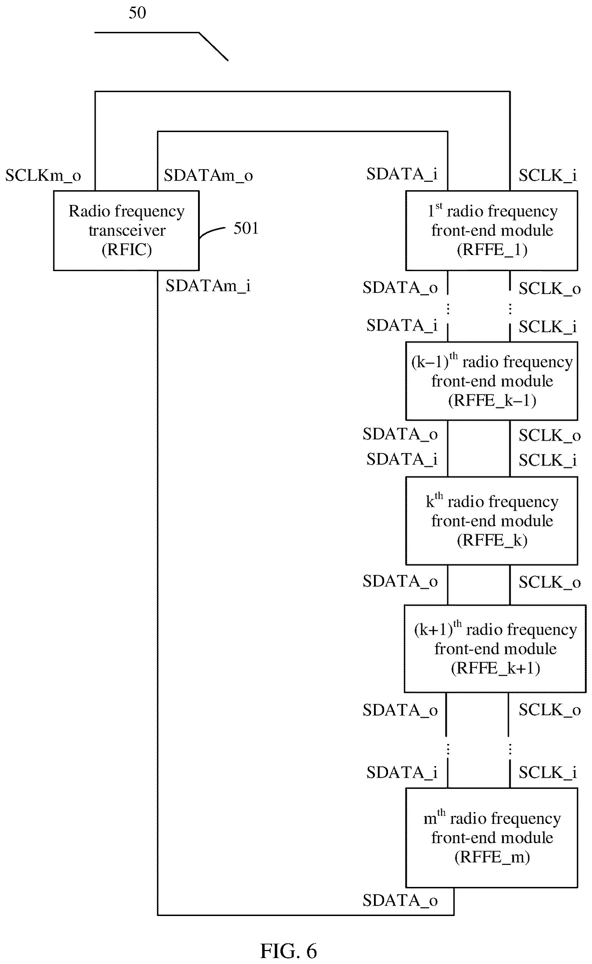

For example, it is assumed that the at least one radio frequency front end is m radio frequency front ends, and a value of m is greater than or equal to 3. FIG. 6 is a diagram of a structure of a radio frequency apparatus 50 according to an embodiment of this application.

The radio frequency apparatus 50 includes a radio frequency transceiver (RFIC) 501 and m radio frequency front-end modules (RFFE_1, RFFE_2, ..., and RFFE_m). The m radio frequency front-end modules may be the same or not completely the same.

A second clock input port SCLK_i of a k^{th} radio frequency front-end module is coupled to a second clock output port SCLK_o of a (k-1)^{th} radio frequency front-end module, and a second clock output port SCLK_o of the k^{th} radio frequency front-end module is coupled to a second clock input port SCLK_i of a (k+1)^{th} radio frequency front-end module, where k is an integer less than or equal to 2.

A second data input port SDATA_i of the k^{th} radio frequency front-end module is coupled to a second data output port SDATA_o of the (k-1)^{th} radio frequency front-end module, and a second data output port SDATA_o of the k^{th} radio frequency front-end module is coupled to a second data input port SDATA_i of the (k+1)^{th} radio frequency front-end module.

The first clock output port SCLKm_o of the radio frequency transceiver 501 is coupled to a second clock input port SCLK_i of the 1^{st} radio frequency front-end module RFFE_1, the first data output port SDATAm_o of the radio frequency transceiver 501 is coupled to a second data input port SDATA_i of the 1^{st} radio frequency front-end module RFFE_1, and a second data output port SDATA_o of the m^{th} radio frequency front-end module RFFE_m is coupled to the first data input port SDATAm_i of the radio frequency transceiver 501.

A pin at a clock input end may not be designed for the radio frequency transceiver 501. When the second clock output port SCLK_o of the m^{th} radio frequency front-end module RFFE_m is not coupled to the clock input end of the radio frequency transceiver 501, for the radio frequency transceiver 501, the pin at the clock input end may not be designed, and pins of the radio frequency transceiver 501 are reduced. In some embodiments, a clock logic circuit in the radio frequency transceiver 501 may sample data during data readback. A specific implementation is described below.

In some embodiments, frame formats of data signals transmitted through the data line in the control bus are the same.

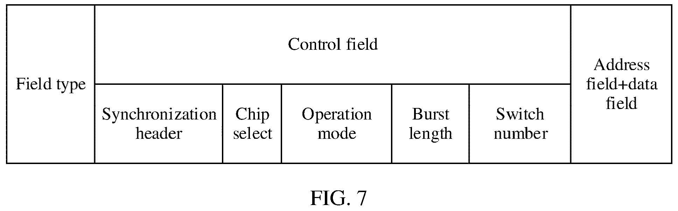

FIG. 7 is a diagram of a frame format of a first data signal in a first control signal. The first data signal in the first control signal may include a control field (command frame) part, and a frame type (frame type) of the control frame part may include a synchronization header (sync header) field, a chip select (chip select) field, an operation mode (operation mode) field, a burst length (burst Length) field, and an address field (address frame).

The synchronization header field indicates that transmission of the first control signal starts.

The chip select field indicates the identifier, in the first control signal, of the radio frequency front-end module.

The operation mode field indicates that the first control signal is a write operation instruction, or a read operation instruction, or an identifier initialization instruction.

The burst length field indicates a register address length for performing one read operation or one write operation.

The address field indicates a register address during a write operation or a read operation.

If the operation mode field indicates that the first data signal is the write operation instruction, the first data signal further includes a switch number (switch number) field and a data field (data frame).

The switch number field indicates a quantity of registers, in the first data signal, when a write operation is performed on a same register address.

The data information field indicates data to be written into the register address indicated by the address field.

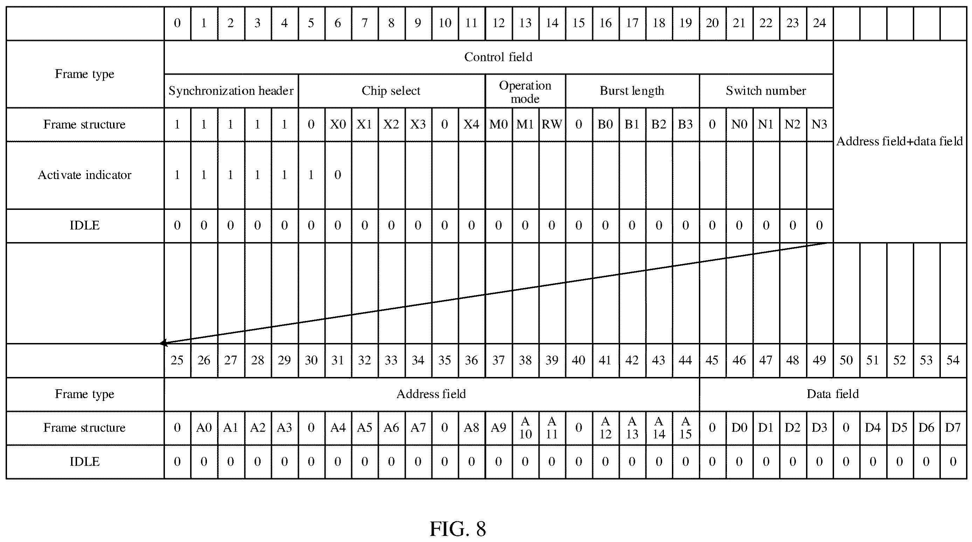

For example, FIG. 8 is a diagram of a frame format of a first data signal in a control signal, and provides schematic descriptions of a frame structure (frame structure) of each field.

The synchronization header field occupies 5 consecutive bits, bit values of the 5 consecutive bits are 1 (111111), and in all bits occupied by fields other than the synchronization header field in the control signal, a bit value of a preceding bit of every 4 consecutive bits is 0.

The chip select field occupies 5 bits, and the 5 bits are shown as "X4X3X2X1X0" in FIG. 8, and indicate a USID of a radio frequency front-end module to be accessed by the radio frequency transceiver 501. If values of the 5 bits of the chip select field are all 0, it may indicate that the first control signal is a broadcast instruction. For example, when the first control signal is a read operation instruction, the first control signal may be used to read data in an address field of each of the at least one radio frequency front-end module 502. Alternatively, when the first control signal is a write operation instruction, the first control signal may be used to write data into an address field of each of the at least one radio frequency front-end module 502.

In some embodiments, cascading of a maximum of 31 radio frequency front-end modules may be supported.

In the operation mode field, 2 bits "M1M0" may indicate an operation mode 1 of a selected radio frequency front-end module, and a bit "RW" may indicate that the control signal is a read operation instruction or a write operation instruction. There may be a plurality of operation modes, for example, writing not taking effect or writing taking effect immediately. This is not limited in this application.

The burst length field occupies 4 bits, and the 4 bits are shown as "B3B2B1B0", and indicate that burst read/write of a maximum of 16 register addresses is supported.

The address field occupies 16 bits, and the 16 bits are shown as "A0 to A15", and indicate that read/write of a maximum of 16 register addresses is supported.

The switch number field occupies 4 bits, and the 4 bits are shown as "N3N2N1N0", and indicate that a maximum of 16 switch numbers are supported. In other words, when the first control signal is a write instruction, a maximum quantity of registers may be 16 when a write operation is performed on a same register address.

The data field may occupy 8 bits, and the 8 bits are shown as "D0 to D7", and indicate to-be-written data.

In addition, if the first control signal is the write instruction, each time after sending the first control signal, the radio frequency transceiver 501 may further send an activate indicator (activate indicator) to the radio frequency front-end module that is about to write data. The activate indicator is also referred to as a trigger instruction. Refer to FIG. 8. The trigger instruction may occupy 6 bits, and bit values are all 1. For example, when "M1M0" in the operation mode field indicates writing not taking effect, and the radio frequency front-end module receives the control signal, written data does not take effect after performing the write operation. When the radio frequency front-end module receives the trigger instruction, the data written into the register takes effect.

FIG. 8 further shows that when the radio frequency transceiver 501 has no instruction to send to the radio frequency front-end module, the radio frequency transceiver 501 may send an idle (IDLE) frame to the at least one radio frequency front-end module. Values of the IDLE frame are all 0.

In some embodiments, when the operation mode field indicates that the first control signal is a read operation instruction, or a write operation instruction, or an identifier initialization instruction,
the first data output port SDATAm_o of the radio frequency transceiver 501 is configured to send the first data signal in the first control signal to the second data input port SDATA_i of the at least one radio frequency front-end module through the data line in the control bus;
the first clock output port SCLKm_o of the radio frequency transceiver 501 is configured to send the first clock signal in the first control instruction to the second clock input port SCLK_i of the at least one radio frequency front-end module through the clock line in the control bus;
when the at least one first radio frequency front-end module is a plurality of first radio frequency front-end modules, for each first radio frequency front-end module, the second data input port SDATA_i of the first radio frequency front-end module is configured to transparently transmit the received first data signal to the second data output port SDATA_o of the first radio frequency front-end module, and the second data output port SDATA_o of the first radio frequency front-end module is configured to send the first data signal of the first control instruction to the second data input port SDATA_i of a next first radio frequency front-end module through the data line in the control bus; and
for each first radio frequency front-end module, the second clock input port SCLK_i of the first radio frequency front-end module is configured to transparently transmit the received first clock signal to the second clock output port SCLK_o of the first radio frequency front-end module, and the second clock output port SCLK_o of the first radio frequency front-end module is configured to send the first clock signal in the first control signal to the second clock input port SCLK_i of the next first radio frequency front-end module through the clock line in the control bus.

In other words, when receiving the read operation instruction, or the write operation instruction, or the identifier initialization instruction, each radio frequency front-end module directly and transparently transmits the read operation instruction, or the write operation instruction, or the identifier initialization instruction to the next radio frequency front-end module.

For example, after receiving the synchronization header field of the first control signal through the second data output port SDATA_o of the (k-1)^{th} radio frequency front-end module RFFE_k-1, the second data input port SDATA_i of the k^{th} radio frequency front-end module RFFE_k may transmit the received first data signal, starting from the synchronization header field, to the second data output port SDATA_o of the k^{th} radio frequency front-end module, and then send the first data signal to the second data input port SDATA_i of the (k+1)^{th} radio frequency front-end module RFFE_k+1 through the second data output port SDATA_o of the k^{th} radio frequency front-end module RFFE_k. In other words, when receiving the first data signal, the second data input port SDATA_i of each radio frequency front-end module immediately and transparently transmits the first data signal to the next radio frequency front-end module.

For the first clock signal, similar to the first data signal, in the read operation instruction, or the write operation instruction, or the identifier initialization instruction, when receiving the first clock signal, the clock input port SCLK_i of each radio frequency front-end module starts to transparently transmit the clock signal to the next radio frequency front-end module, which is synchronously with the first data signal.

In some embodiments, when the operation mode field of the first data signal indicates that the first control signal is the write operation instruction, if the chip select field of the first data signal indicates an identifier of the k^{th} radio frequency front-end module RFFE_k, this is equivalent to that the radio frequency transceiver 501 performs a write operation on the k^{th} radio frequency front-end module RFFE_k.

The k^{th} radio frequency front-end module RFFE_k is further configured to collect, based on the clock signal input through the second clock input port SCLK_i of the k^{th} radio frequency front-end module RFFE_k, the first data signal (the address field and the data field) input through the second data input port SDATA_i of the k^{th} radio frequency front-end module, and perform the write operation on the data field based on the burst length field, the address field, and the switch number field.

In some embodiments, when the operation mode field of the first control signal indicates that the first control signal is the read operation instruction, the chip select field indicates the identifier of the k^{th} radio frequency front-end module RFFE_k in the at least one radio frequency front-end module, and k is a natural number,
the k^{th} radio frequency front-end module RFFE_k is configured to: read data information based on the burst length field, the address field, and the switch number field, generate a read response instruction, and transmit a data signal of the read response instruction to the first data input port SDATAm_i of the radio frequency transceiver 501 through the second data output port SDATA_o of the k^{th} radio frequency front-end module, a data port between the second data output port SDATA_o of the k^{th} radio frequency front-end module RFFE_k and the second data output port SDATA_o of the second radio frequency front-end module RFFE_m, and the second data output port SDATA_o of the second radio frequency front-end module RFFE_m; and
transmit a clock signal of the read response instruction to the second clock input port SCLK_i of the second radio frequency front-end module RFFE_m through the second clock output port SCLK_o of the k^{th} radio frequency front-end module RFFE_k, and a clock port between the second clock output port SCLK_o of the k^{th} radio frequency front-end module RFFE_k and the second clock input port SCLK_i of the second radio frequency front-end module RFFE_m.

The radio frequency transceiver 501 is configured to sample, by using a clock recovery circuit in the radio frequency transceiver 501, the data signal that is of the read response instruction and that is input from the first data input port SCLKm_i.

In other words, when generating the read response instruction, the k^{th} radio frequency front-end module RFFE_k may transmit the data signal of the read response instruction to the radio frequency transceiver 501 by using all subsequent radio frequency front-end modules of the k^{th} radio frequency front-end module RFFE_k in the loop.

When the pin at the clock input end is not disposed on the radio frequency transceiver 501, only a pin of the first data input port SDATAm_i may be reserved. The radio frequency transceiver 501 may consider that the first data input port SDATAm_i of the radio frequency transceiver 501 performs an asynchronous input. For example, a clock data recovery (Clock Data Recovery, CDR) technology may be used to collect a data signal. This is equivalent to collecting a phase of the data signal, and the clock signal in the data signal does not need to be recovered. For example, a falling edge may be used to collect data, and collection starts when the data signal is identified based on the data whose bit values are 5 consecutive bits.

Certainly, in some embodiments, the radio frequency transceiver 501 may alternatively be designed with the clock input end for receiving the clock signal. This is not limited in this application.

In some embodiments, after the radio frequency transceiver 501 and the at least one radio frequency front-end module are powered on, a USID may be initialized for the at least one radio frequency front-end module, to ensure that each radio frequency front-end module corresponds to a different USID. When the at least one radio frequency front-end module is cascade-coupled to the radio frequency transceiver 501 in this application, a USID initialization operation may be performed based on an actual hardware topology structure.

For example, when the operation mode field indicates that the first control signal is a first identifier initialization instruction, a first data signal of the first identifier initialization instruction includes the identifier of the 1^{st} radio frequency front-end module RFFE_1 in the at least one radio frequency front-end module.

When the at least one radio frequency front-end module is a plurality of radio frequency front-end modules, the 1^{st} radio frequency front-end module RFFE_1 is configured to configure the identifier of the 1^{st} radio frequency front-end module RFFE_1 according to the first identifier initialization instruction received through the second data input port SDATA_i and the second clock input port SCLK_i of the 1^{st} radio frequency front-end module RFFE_1, and generate a second identifier initialization instruction, where the second identifier initialization instruction includes an identifier of a 2^{nd} radio frequency front-end module RFFE_2 in the at least one radio frequency front-end module; and send the second identifier initialization instruction to the 2^{nd} radio frequency front-end module RFFE_2 through the second data output port SDATA_o and the second clock output port SCLK_o of the 1^{st} radio frequency front-end module RFFE_1. In this way, the 2^{nd} radio frequency front-end module RFFE_2 may configure the identifier of the 2^{nd} radio frequency front-end module RFFE_2 according to the received second identifier initialization instruction.

Based on the foregoing examples, the k^{th} radio frequency front-end module RFFE_k in the at least one radio frequency front-end module is configured to: receive, through the second data input port SDATA_i and the second clock input port SCLK_i of the k^{th} radio frequency front-end module RFFE_k, a k^{th} identifier initialization instruction sent by the (k-1)^{th} radio frequency front-end module RFFE_k-1, where the k^{th} identifier initialization instruction includes an identifier of the k^{th} radio frequency front-end module RFFE_k; and configure the identifier of the k^{th} radio frequency front-end module RFFE_k according to the k^{th} identifier initialization instruction; and
generate a (k+1)^{th} identifier initialization instruction, where the (k+1)^{th} identifier initialization instruction includes an identifier of the (k+1)^{th} radio frequency front-end module RFFE_k+1 in the at least one radio frequency front-end module; and send the (k+1)^{th} identifier initialization instruction to the (k+1)^{th} radio frequency front-end module RFFE_k+1 through the second data output port SDATA_o and the second clock output port SCLK_o of the k^{th} radio frequency front-end module RFFE_k. In this way, the (k+1)^{th} radio frequency front-end module RFFE_k+1 may configure the identifier of the (k+1)^{th} radio frequency front-end module RFFE_k+1 according to the (k+1)^{th} identifier initialization instruction.

For example, when bit values of "M1M0" in the operation mode field is "00", it indicates that the control signal is a USID operation for initializing the radio frequency front end. Data content carried in the data field of the control signal may indicate an initialization identifier of the 1^{st} radio frequency front-end module RFFE_1. For example, the initialization identifier of the 1^{st} radio frequency front-end module RFFE_1 is "1." When the control signal (the first identifier initialization instruction) is received through the second data input port SDATA_i and the second clock input port SCLK_i of the first radio frequency front-end module RFFE_1, and it is identified that the control signal is an operation for initializing a USID of a radio frequency front end, the control signal may be directly and transparently transmitted to the 2^{nd} radio frequency front-end module RFFE_2 through the second data output port SDATA_o and the second clock output end SCLK_o. Then, the 1^{st} radio frequency front-end module RFFE_1 may configure a USID of the 1^{st} radio frequency front-end module RFFE_1 based on the data content carried in the data field of the control signal, that is, configure the USID of the 1^{st} radio frequency front-end module RFFE_1 to "1". Then, the 1^{st} radio frequency front-end module RFFE_1 sends the second identifier initialization instruction to the 2^{nd} radio frequency front-end module RFFE_2. The second identifier initialization instruction carries a USID of the 2^{nd} radio frequency front-end module RFFE_2.

The foregoing process may also be understood as follows: Each first radio frequency front-end module that receives the identifier initialization instruction (the first identifier initialization instruction) needs to transparently transmit the identifier initialization instruction, and each first radio frequency front-end module further needs to generate an instruction indicating an identifier of a next radio frequency front-end module, and transmit the instruction to the next radio frequency front-end module. The second radio frequency front-end module only needs to configure the identifier of the second radio frequency front-end module according to the identifier initialization instruction generated by the previous first radio frequency front-end module, and does not need to transparently transmit the first identifier initialization instruction.

In some embodiments, the identifier initialization instruction generated by each first radio frequency front-end module may also carry the identifier of the first radio frequency front-end module, and the next radio frequency front-end module needs to first obtain the identifier of the next radio frequency front-end module through calculation based on the received identifier, and then perform identifier configuration.

In comparison with a conventional solution in which USID programming cannot be performed when there are two completely same radio frequency front-end modules, in this application, there may be at least two same radio frequency front-end modules in the m radio frequency front-end modules. In other words, through the foregoing USID initialization process, USID configuration may also be performed on two same radio frequency front-end modules on a radio frequency front-end module link.

In some embodiments, a clock line between the first clock output port SCLKm_o of the radio frequency transceiver 501 and the second clock input port SCLK_i of the 1^{st} radio frequency front-end module RFFE_1 in the at least one radio frequency front-end module has a same length as a data line between the first data output port SDATAm_o of the radio frequency transceiver 501 and the second data input port SDATA_i of the 1^{st} radio frequency front-end module.

For two adjacent radio frequency front-end modules in the at least one radio frequency front-end module, a clock line between the second clock output port SCLK_o of a previous radio frequency front-end module and the second clock input port SCLK_i of a current radio frequency front-end module has a same length as a data line between the second data output port SDATA_o of the previous radio frequency front-end module and the second data input port SDATA_i of the current radio frequency front-end module.

For example, the length of the data line between the data port of the radio frequency transceiver 501 and the data port SDATA_i of RFFE_1 is equal to the length of the clock line between the clock port of the radio frequency transceiver 501 and the clock port SCLK_o of RFFE_1, and a length of a data line between data ports of RFFE_1 and RFFE_2 is equal to a length of a clock line between clock ports of RFFE_1 and RFFE_2. The rest can be deduced by analogy.

In this way, when the clock line and the data line between the radio frequency devices have a same length, a phase relationship between a clock and data of any two radio frequency devices can remain unchanged. This facilitates timing convergence. In addition, a distance between the radio frequency devices may not be limited, provided that the clock line and the data line have a same length. When the control signal is unidirectionally transmitted based on the daisy chain, even if data readback is performed, a rate may not be reduced, that is, readback can be implemented at a full rate. This improves a rate of the control signal between the radio frequency transceiver and the radio frequency front-end modules.

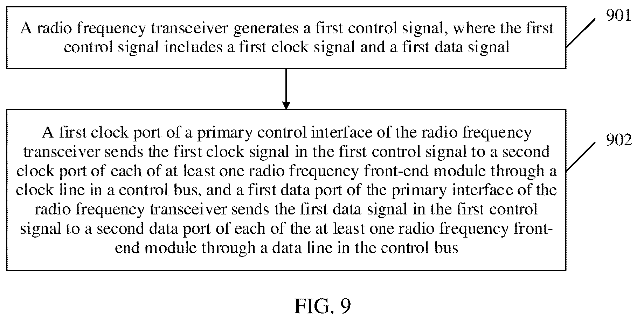

Based on the descriptions of the radio frequency apparatus 50 in the foregoing embodiments, FIG. 9 is a schematic flowchart of a control signal transmission method according to an embodiment of this application.

901: A radio frequency transceiver generates a first control signal, where the first control signal includes a first clock signal and a first data signal.

902: A first clock port of a primary control interface of the radio frequency transceiver sends the first clock signal in the first control signal to a second clock port of each of at least one radio frequency front-end module through a clock line in a control bus, and a first data port of the primary interface of the radio frequency transceiver sends the first data signal in the first control signal to a second data port of each of the at least one radio frequency front-end module through a data line in the control bus.

In some embodiments, when an operation mode field indicates that the first control signal is a read operation instruction, or a write operation instruction, or an identifier initialization instruction,
that a first data output port of the radio frequency transceiver sends the first data signal in the first control signal to a second data input port of the at least one radio frequency front-end module through the control bus includes:

The first data output port of the radio frequency transceiver sends the first data signal in the first control instruction to the second data input port of the at least one radio frequency front-end module through the data line in the control bus.

For each first radio frequency front-end module, the second data input port of the first radio frequency front-end module transparently transmits the received first data signal to the second data output port of the first radio frequency front-end module, and the second data output port of the first radio frequency front-end module sends the first data signal of the first control instruction to the second data input port of a next first radio frequency front-end module through the data line in the control bus.

That a first clock output port of the radio frequency transceiver sends the first clock signal in the first control signal to a second clock input port of the at least one radio frequency front-end module through the control bus includes:

The first clock output port of the radio frequency transceiver sends the first clock signal in the first control instruction to the second clock input port of the at least one radio frequency front-end module through the clock line in the control bus.

For each first radio frequency front-end module, the second clock input port of the first radio frequency front-end module transparently transmits the received first clock signal to the second clock output port of the first radio frequency front-end module, and the second clock output port of the first radio frequency front-end module sends the first clock signal of the first control instruction to the second clock input port of the next first radio frequency front-end module through the clock line in the control bus. When the operation mode field indicates that the first control signal is the read operation instruction, and the chip select field indicates an identifier of a k^{th} first radio frequency front-end module in the at least one radio frequency front-end module, the method further includes:
the k^{th} first radio frequency front-end module reads data information based on a burst length field, an address field, and a switch number field, generates a read response instruction, and transmits a data signal of the read response instruction to the first data input port of the radio frequency transceiver through the second data output port of the k^{th} first radio frequency front-end module, a data port between the second data output port of the k^{th} first radio frequency front-end module and the second data output port of the second radio frequency front-end module, and the second data output port of the second radio frequency front-end module; and
transmits a clock signal of the read response instruction to the second clock input port of the second radio frequency front-end module through the second clock output port of the k^{th} first radio frequency front-end module, and a clock port between the second clock output port of the k^{th} first radio frequency front-end module and the second clock input port of the second radio frequency front-end module.

The radio frequency transceiver samples, by using a clock recovery circuit in the radio frequency transceiver, the data signal that is of the read response instruction and that is input from the first data input port.

In some embodiments, when the operation mode field indicates that the first control signal is a first identifier initialization instruction, a first data signal of the first identifier initialization instruction includes an identifier of a 1^{st} radio frequency front-end module in the at least one radio frequency front-end module, and the method further includes:

The 1^{st} radio frequency front-end module configures the identifier of the 1^{st} radio frequency front-end module according to the first identifier initialization instruction received through the second data input port and the second clock input port of the 1^{st} radio frequency front-end module, and generates a second identifier initialization instruction, where the second identifier initialization instruction includes an identifier of a 2^{nd} radio frequency front-end module in the at least one radio frequency front-end module; and sends the second identifier initialization instruction to the 2^{nd} radio frequency front-end module through the second data output port and the second clock output port of the 1^{st} radio frequency front-end module.

A k^{th} radio frequency front-end module in the at least one radio frequency front-end module is configured to: receive, through the second data input port and the second clock input port of the k^{th} radio frequency front-end module, a k^{th} identifier initialization instruction sent by a (k-1)^{th} radio frequency front-end module, where the k^{th} identifier initialization instruction includes an identifier of the k^{th} radio frequency front-end module; and configure the identifier of the k^{th} radio frequency front-end module according to the k^{th} identifier initialization instruction; and
generate a (k+1)^{th} identifier initialization instruction, where the (k+1)^{th} identifier initialization instruction includes an identifier of a (k+1)^{th} radio frequency front-end module in the at least one radio frequency front-end module; and send the (k+1)^{th} identifier initialization instruction to the (k+1)^{th} radio frequency front-end module through the second data output port and the second clock output port of the k^{th} radio frequency front-end module.

For implementations of step 901 and step 902, refer to the foregoing descriptions of the radio frequency apparatus 50.

Therefore, when the control signal is unidirectionally transmitted based on the daisy chain, even if data readback is performed, a rate may not be reduced, that is, readback can be implemented at a full rate. This improves a rate of the control signal between the radio frequency transceiver and the radio frequency front ends.

Based on the foregoing descriptions of the implementations, a person skilled in the art may understand that for the purpose of convenient and brief description, division into the foregoing functional modules is merely used as an example for description. During actual application, the foregoing functions can be allocated to different functional modules for implementation based on a requirement, that is, an inner structure of an apparatus is divided into different functional modules to implement all or some of the functions described above.

In the several embodiments provided in this application, it should be understood that the disclosed apparatus and method may be implemented in other manners. For example, the described apparatus embodiment is merely an example. For example, the module or division into the units is merely logical function division and may be other division during actual implementation. For example, a plurality of units or components may be combined or integrated into another apparatus, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may be one or more physical units, may be located in one place, or may be distributed on different places. Some or all of the units may be selected based on actual requirements to achieve objectives of the solutions of embodiments.

In addition, functional units in embodiments of this application may be integrated into one processing unit, each of the units may exist alone physically, or two or more units may be integrated into one unit. The integrated unit may be implemented in a form of hardware, or may be implemented in a form of a software functional unit.

When the integrated unit is implemented in the form of a software functional unit and sold or used as an independent product, the integrated unit may be stored in a readable storage medium. Based on such an understanding, the technical solutions in embodiments of this application essentially, or the part contributing to the conventional technology, or all or some of the technical solutions may be implemented in the form of a software product. The software product is stored in a storage medium and includes several instructions for instructing a device (which may be a single-chip microcomputer, a chip or the like) or a processor (processor) to perform all or some of the steps of the methods described in embodiments of this application. The foregoing storage medium includes any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art in the technical scope disclosed in this application shall fall within the protection scope of this application. Therefore, the protection scope of this application shall be subject to the protection scope of the claims.

## Claims

1. A radio frequency apparatus, wherein the radio frequency apparatus comprises:
a radio frequency transceiver, comprising a primary control interface, wherein the primary control interface comprises a first clock port and a first data port; and
at least one radio frequency front-end module, wherein each radio frequency front-end module comprises a secondary control interface, and the secondary control interface comprises a second clock port and a second data port, wherein
the first clock port is coupled to the second clock port of the at least one radio frequency front-end module through a control bus based on a daisy chain of a linear topology structure, and the first data port is coupled to the second data port of the at least one radio frequency front-end module through the control bus based on a daisy chain of a ring topology structure.

2. The radio frequency apparatus according to claim 1, wherein
the first clock port comprises a first clock output port, the second clock port comprises a second clock input port, and the first clock output port is cascade-coupled to the second clock input port of the at least one radio frequency front-end module in sequence through a clock line in the control bus based on the daisy chain of the linear topology structure.

3. The radio frequency apparatus according to claim 1 or 2, wherein
the first data port comprises a first data output port and a first data input port, and the second data port comprises a second data input port and a second data output port; and
the first data output port and the first data input port are coupled to the second data input port and the second data output port of the at least one radio frequency front-end module through a data line in the control bus based on the daisy chain of the ring topology structure, to form a data loopback link.

4. The radio frequency apparatus according to claim 2 or 3, wherein
when the at least one radio frequency front-end module is a plurality of radio frequency front-end modules, the plurality of radio frequency front-end modules comprise at least one first radio frequency front-end module and a second radio frequency front-end module, and the second radio frequency front-end module is a last radio frequency front-end module on the daisy chain of the linear topology structure; and
the secondary control interface of each first radio frequency front-end module further comprises a second clock output port.

5. The radio frequency apparatus according to any one of claims 1 to 4, wherein the primary control interface transparently transmits a first control signal through the control bus, the first control signal comprises a first clock signal and a first data signal, and the first clock signal indicates the radio frequency front-end module to sample the received first data signal;
the first clock port transparently transmits the first clock signal to the second clock port of each radio frequency front-end module through the clock line in the control bus; and
the first data port transparently transmits the first data signal to the second data port of each radio frequency front-end module through the data line in the control bus.

6. The radio frequency apparatus according to claim 5, wherein when the first control signal indicates a target radio frequency front-end module in the at least one radio frequency front-end module to perform a write operation, the first control signal comprises an identifier, to-be-written data, and a register address of the target radio frequency front-end module; and
the target radio frequency front-end module is configured to: sample the first data signal based on the first clock signal, to obtain the to-be-written data and the register address; and write the to-be-written data into a register of the target radio frequency front-end module based on the register address.

7. The radio frequency apparatus according to claim 5, wherein the first control signal indicates a target radio frequency front-end module in the at least one radio frequency front-end module to perform a read operation, and when the read operation is used to read back data that is written into a register of the target radio frequency front-end module, the first control signal comprises an identifier and a register address of the target radio frequency front-end module;
the target radio frequency front-end module is configured to: after sampling the first data signal based on the first clock signal to obtain the register address, read the data corresponding to the register address, and generate a second control signal, wherein the second control signal comprises the data corresponding to the register address; and
the target radio frequency front-end module transparently transmits the second control signal to the radio frequency transceiver.

8. The radio frequency apparatus according to claim 5, wherein when the first control signal indicates the at least one radio frequency front-end module to perform an identifier initialization operation of the radio frequency front-end module, the first control signal comprises an identifier of a 1^{st} radio frequency front-end module in the at least one radio frequency front-end module; and
each radio frequency front-end module is configured to: after performing local-identifier initialization of the radio frequency front-end module, generate a third control signal, wherein the third control signal comprises an identifier of a next radio frequency front-end module; and send the third control signal to the next radio frequency front-end module.

9. The radio frequency apparatus according to any one of claims 5 to 8, wherein the first data signal comprises a synchronization header field, a chip select field, an operation mode field, a burst length field, and an address field;
the synchronization header field indicates that transmission of the first control signal starts;
the chip select field indicates the identifier, in the first control signal, of the radio frequency front-end module;
the operation mode field indicates that the first control signal is a write operation instruction, or a read operation instruction, or an identifier initialization instruction;
the burst length field indicates a register address length for performing one read operation or one write operation; and
the address field indicates a register address during a write operation or a read operation.

10. The radio frequency apparatus according to claim 9, wherein the synchronization header field occupies 5 consecutive bits, bit values of the 5 consecutive bits are 1, and in all bits occupied by fields other than the synchronization header field in the first data signal, a bit value of a preceding bit of every 4 consecutive bits is 0.

11. The radio frequency apparatus according to claim 9 or 10, wherein when the operation mode field indicates that the first control signal is the write operation instruction, the first data signal further comprises a switch number field and a data field; and
the switch number field indicates a quantity of registers when a write operation is performed on a same register address, and the data field indicates data to be written into the register address indicated by the address field.

12. The radio frequency apparatus according to any one of claims 9 to 11, wherein when the operation mode field indicates that the first control signal is the read operation instruction, or the write operation instruction, or the identifier initialization instruction,
the first data output port of the radio frequency transceiver is configured to send the first data signal to the second data input port of the at least one radio frequency front-end module through the data line;
the first clock output port of the radio frequency transceiver is configured to send the first clock signal to the second clock input port of the at least one radio frequency front-end module through the clock line;
when the at least one first radio frequency front-end module is a plurality of first radio frequency front-end modules, for each first radio frequency front-end module, the second data input port of the first radio frequency front-end module is configured to transparently transmit the received first data signal to the second data output port of the first radio frequency front-end module, and the second data output port of the first radio frequency front-end module is configured to send the first data signal to the second data input port of a next first radio frequency front-end module through the data line; and
the second clock input port of the first radio frequency front-end module is configured to transparently transmit the received first clock signal to the second clock output port of the first radio frequency front-end module, and the second clock output port of the first radio frequency front-end module is configured to send the first clock signal to the second clock input port of the next first radio frequency front-end module through the clock line.

13. The radio frequency apparatus according to claim 11, wherein when the operation mode field indicates that the first data signal is the read operation instruction, the chip select field indicates an identifier of a k^{th} radio frequency front-end module in the at least one radio frequency front-end module, and k is a natural number,
the k^{th} radio frequency front-end module is configured to: read data information based on the burst length field, the address field, and the switch number field, generate a read response instruction, and transmit a data signal of the read response instruction to the first data input port of the radio frequency transceiver through the second data output port of the k^{th} radio frequency front-end module, a data port between the second data output port of the k^{th} radio frequency front-end module and the second data output port of the second radio frequency front-end module, and the second data output port of the second radio frequency front-end module; and
transmit a clock signal of the read response instruction to the second clock input port of the second radio frequency front-end module through the second clock output port of the k^{th} radio frequency front-end module, and a clock port between the second clock output port of the k^{th} radio frequency front-end module and the second clock input port of the second radio frequency front-end module; and
the radio frequency transceiver is configured to sample, by using a clock recovery circuit in the radio frequency transceiver, the data signal that is of the read response instruction and that is input from the first data input port.

14. The radio frequency apparatus according to any one of claims 9 to 11, wherein when the operation mode field indicates that the first data signal is a first identifier initialization instruction, a first data signal of the first identifier initialization instruction comprises the identifier of the 1^{st} radio frequency front-end module in the at least one radio frequency front-end module;
when the at least one radio frequency front-end module is a plurality of radio frequency front-end modules, the 1^{st} radio frequency front-end module is configured to configure the identifier of the 1^{st} radio frequency front end according to the first identifier initialization instruction received through the second data input port and the second clock input port of the 1^{st} radio frequency front-end module, and generate a second identifier initialization instruction, wherein the second identifier initialization instruction comprises an identifier of a 2^{nd} radio frequency front-end module in the at least one radio frequency front-end module; and send the second identifier initialization instruction to the 2^{nd} radio frequency front-end module through the second data output port and the second clock output port of the 1^{st} radio frequency front-end module; and
a k^{th} radio frequency front-end module in the at least one radio frequency front-end module is configured to: receive, through the second data input port and the second clock input port of the k^{th} radio frequency front-end module, a k^{th} identifier initialization instruction sent by a (k-1)^{th} radio frequency front-end module, wherein the k^{th} identifier initialization instruction comprises an identifier of the k^{th} radio frequency front-end module; and configure the identifier of the k^{th} radio frequency front-end module according to the k^{th} identifier initialization instruction; and
generate a (k+1)^{th} identifier initialization instruction, wherein the (k+1)^{th} identifier initialization instruction comprises an identifier of a (k+1)^{th} radio frequency front-end module in the at least one radio frequency front-end module; and send the (k+1)^{th} identifier initialization instruction to the (k+1)^{th} radio frequency front-end module through the second data output port and the second clock output port of the k^{th} radio frequency front-end module.

15. The radio frequency apparatus according to any one of claims 4 to 14, wherein
a clock line between the first clock output port of the radio frequency transceiver and the second clock input port of the 1^{st} radio frequency front-end module in the at least one radio frequency front-end module has a same length as a data line between the first data output port of the radio frequency transceiver and the second data input port of the 1^{st} radio frequency front-end module; and
for two adjacent radio frequency front-end modules in the at least one radio frequency front-end module, a clock line between the second clock output port of a previous radio frequency front-end module and the second clock input port of a current radio frequency front-end module has a same length as a data line between the second data output port of the previous radio frequency front-end module and the second data input port of the current radio frequency front-end module.

16. A control signal transmission method, wherein the method is applied to a radio frequency apparatus; the radio frequency apparatus comprises: a radio frequency transceiver, wherein the radio frequency transceiver comprises a primary control interface, and the primary control interface comprises a first clock port and a first data port; and at least one radio frequency front-end module, wherein each radio frequency front-end module comprises a secondary control interface, and the secondary control interface comprises a second clock port and a second data port; the first clock port is coupled to the second clock port of the at least one radio frequency front-end module through a control bus based on a daisy chain of a linear topology structure, and the first data port is coupled to the second data port of the at least one radio frequency front-end module through the control bus based on a daisy chain of a ring topology structure; and the method comprises:
sending, by the first clock port of the primary control interface, a first clock signal in a first control signal to the second clock port of each radio frequency front-end module through a clock line in the control bus; and
sending, by the first data port of the primary control interface, a first data signal in the first control signal to the second data port of each radio frequency front-end module through a data line in the control bus, wherein the first clock signal is used by each radio frequency front-end module to sample the received first data signal.

17. The method according to claim 16, wherein
the first clock port comprises a first clock output port, the second clock port comprises a second clock input port, and the first clock output port is cascade-coupled to the second clock input port of the at least one radio frequency front-end module in sequence through the clock line in the control bus based on the daisy chain of the linear topology structure.

18. The method according to claim 16 or 17, wherein
the first data port comprises a first data output port and a first data input port, and the second data port comprises a second data input port and a second data output port; and
the first data output port and the first data input port are coupled to the second data input port and the second data output port of the at least one radio frequency front-end module through the data line in the control bus based on the daisy chain of the ring topology structure, to form a data loopback link.

19. The method according to claim 17 or 18, wherein
when the at least one radio frequency front-end module is a plurality of radio frequency front-end modules, the plurality of radio frequency front-end modules comprise at least one first radio frequency front-end module and a second radio frequency front-end module, and the second radio frequency front-end module is a last radio frequency front-end module on the daisy chain of the linear topology structure; and
the secondary control interface of each first radio frequency front-end module further comprises a second clock output port.

20. The method according to any one of claims 16 to 19, wherein the primary control interface transparently transmits the first control signal through the control bus, the first control signal comprises the first clock signal and the first data signal, and the first clock signal indicates the radio frequency front-end module to sample the received first data signal;
the first clock port transparently transmits the first clock signal to the second clock port of each radio frequency front-end module through the clock line in the control bus; and
the first data port transparently transmits the first data signal to the second data port of each radio frequency front-end module through the data line in the control bus.

21. The method according to claim 20, wherein when the first control signal indicates a target radio frequency front-end module in the at least one radio frequency front-end module to perform a write operation, the first control signal comprises an identifier, to-be-written data, and a register address of the target radio frequency front-end module; and
the target radio frequency front-end module samples the first data signal based on the first clock signal, to obtain the to-be-written data and the register address; and writes the to-be-written data into a register of the target radio frequency front-end module based on the register address.

22. The method according to claim 20, wherein the first control signal indicates a target radio frequency front-end module in the at least one radio frequency front-end module to perform a read operation, and when the read operation is used to read back data that is written into a register of the target radio frequency front-end module, the first control signal comprises an identifier and a register address of the target radio frequency front-end module;
after sampling the first data signal based on the first clock signal to obtain the register address, the target radio frequency front-end module reads the data corresponding to the register address, and generates a second control signal, wherein the second control signal comprises the data corresponding to the register address; and
the target radio frequency front-end module transparently transmits the second control signal to the radio frequency transceiver.

23. The method according to claim 20, wherein when the first control signal indicates the at least one radio frequency front-end module to perform an identifier initialization operation of the radio frequency front-end module, the first control signal comprises an identifier of a 1^{st} radio frequency front-end module in the at least one radio frequency front-end module; and
after performing local-identifier initialization of a radio frequency front-end module, each radio frequency front-end module generates a third control signal, wherein the third control signal comprises an identifier of a next radio frequency front-end module; and sends the third control signal to the next radio frequency front-end module.

24. The method according to any one of claims 20 to 23, wherein the first data signal comprises a synchronization header field, a chip select field, an operation mode field, a burst length field, and an address field;
the synchronization header field indicates that transmission of the first control signal starts;
the chip select field indicates the identifier, in the first control signal, of the radio frequency front-end module;
the operation mode field indicates that the first control signal is a write operation instruction, or a read operation instruction, or an identifier initialization instruction;
the burst length field indicates a register address length for performing one read operation or one write operation; and
the address field indicates a register address during a write operation or a read operation.

25. The method according to claim 24, wherein the synchronization header field occupies 5 consecutive bits, bit values of the 5 consecutive bits are 1, and in all bits occupied by fields other than the synchronization header field in the first data signal, a bit value of a preceding bit of every 4 consecutive bits is 0.

26. The method according to claim 24 or 25, wherein when the operation mode field indicates that the first control signal is the write operation instruction, the first data signal further comprises a switch number field and a data field; and
the switch number field indicates a quantity of registers when a write operation is performed on a same register address, and the data field indicates data to be written into the register address indicated by the address field.

27. The method according to any one of claims 19 to 26, wherein
a clock line between the first clock output port of the radio frequency transceiver and the second clock input port of the 1^{st} radio frequency front-end module in the at least one radio frequency front-end module has a same length as a data line between the first data output port of the radio frequency transceiver and the second data input port of the 1^{st} radio frequency front-end module; and
for two adjacent radio frequency front-end modules in the at least one radio frequency front-end module, a clock line between the second clock output port of a previous radio frequency front-end module and the second clock input port of a current radio frequency front-end module has a same length as a data line between the second data output port of the previous radio frequency front-end module and the second data input port of the current radio frequency front-end module.

28. A computer-readable storage medium, comprising computer instructions, wherein when the computer instructions are run on an electronic device, the electronic device is enabled to perform the method according to any one of claims 16 to 27.
